# EUROPÄISCHE PATENTSCHRIFT

(11) **EP 4 454 831 B1**
(45) Veröffentlichungstag und Bekanntmachung des Hinweises auf die Patenterteilung: **15.04.2026**
(21) Anmeldenummer: 24172367.5
(22) Anmeldetag: 25.04.2024
(51) Int. Cl.: B25J 11/00, B25J 15/02

(54) **VORRICHTUNG ZUM GREIFEN VON LEBENSMITTELN ODER PHARMAZEUTISCHEN PRODUKTEN**
DEVICE FOR GRIPPING FOODSTUFFS OR PHARMACEUTICAL PRODUCTS
DISPOSITIF DE PRÉHENSION D'ALIMENTS OU DE PRODUITS PHARMACEUTIQUES

(30) Priorität: 26.04.2023 EP 23170124
(43) Veröffentlichungstag der Anmeldung: 30.10.2024
(73) Patentinhaber: NTI AG, 8957 Spreitenbach (CH)
(72) Erfinder: Rohner, Ronald, Remetschwil (CH)
(74) Vertreter: Bohest AG

(56) Entgegenhaltungen:
- JP-A- 2012 127 764
- US-A1- 2008 258 568
- US-A1- 2013 134 726
- US-B1- 11 542 103

## Beschreibung

Die vorliegende Erfindung betrifft eine Vorrichtung zum Greifen von Lebensmitteln oder pharmazeutischen Produkten gemäss Anspruch 1 sowie ein System zum Greifen und Transportieren von Lebensmitteln oder pharmazeutischen Produkten.

Greifvorrichtungen sind von grundlegender Bedeutung in der automatisierten Handhabung von einzelnen Teilen oder Objekten und werden in einer Vielzahl verschiedener Industriebereiche eingesetzt. Entsprechend den jeweiligen Anforderungen, die insbesondere durch das Gewicht und die Abmessungen des zu greifenden Teils oder Objekts bestimmt werden, kommen verschiedene Arten von Greifvorrichtungen zum Einsatz. Diese reichen von Greifvorrichtungen mit nur wenigen (z.B. zwei) Fingern, bei denen die Teile formschlüssig gegriffen werden, bis hin zu Vorrichtungen mit einer grossen Anzahl von beweglichen Fingern, welche sowohl form- als auch kraftschlüssig arbeiten. Hinzu kommen weitere Arten, zu denen insbesondere Vakuumgreifer, Magnetgreifer und Adhäsionsgreifer gehören.

Und auch wenn zwischen dem Gewicht und den Abmessungen des zu greifenden Teils oder Objekts erhebliche Unterschiede bestehen (wie z.B. beim automatischen Greifen eines Mikroprozessors gegenüber einer Dachscheibe für ein Personenfahrzeug), so haben im Maschinen- und Apparatebau bzw. in der industriellen Fertigung in diesem Bereich die auszuführenden Greifvorgänge gemeinsam, dass die zu greifenden Teile und Objekte jeweils sehr genau definiert sind. Dies betrifft sowohl die geometrischen Abmessungen der zu greifenden Teile oder Objekte, als auch deren Gewicht, Materialeigenschaften, Oberflächenbeschaffenheit, etc.. Daher besteht der Aufbau von industriellen Greifern für den Einsatz im Maschinen- und Apparatebau zumeist aus einer hochentwickelten Mechanik, welche es ermöglicht, den Greifvorgang sehr präzise und mit grosser Wiederholgenauigkeit auszuführen.

Die Anforderungen für die Lebensmittelindustrie unterschieden sich sehr wesentlich von denen im industriellen Maschinen- und Apparatebau bzw. der industriellen Fertigung in diesem Bereich. Grundsätzlich muss in der Lebensmittelindustrie unterschieden werden, ob die Greifvorrichtung ein bereits verpacktes Lebensmittel oder das Lebensmittel selbst greifen soll. Im ersten Fall (Greifen des bereits verpackten Lebensmittels) sind die Konturen und Abmessungen der Verpackung zwar grundsätzlich ebenfalls bekannt, jedoch sind typischerweise die Toleranzen der geometrischen Abmessungen der entsprechenden Verpackung bedeutend grösser als die Toleranzen von industriell gefertigten Teilen bzw. Objekten im Maschinen- und Apparatebau und der industriellen Fertigung in diesem Bereich. Ausserdem sind Verpackungen in der Lebensmittelindustrie in den meisten Fällen auch berührungsempfindlich und dürfen nicht mit einer allzu grossen Kraft gegriffen oder zusammengepresst werden. Im zweiten Fall (Greifen des Lebensmittels selbst) sind die Abmessungen und auch die Konturen des zu greifenden Teils oder Objekts (nämlich des Lebensmittels) nur im Grossen und Ganzen bekannt und können, zum Beispiel wenn es sich um Früchte und Gemüse handelt, wesentlich von der Norm abweichen. Selbst wenn es sich bei dem zu greifenden Lebensmittel um industriell gefertigte Produkte wie zum Beispiel Brötchen, Käsestücke oder Pizzas handelt, muss mit Abweichungen der Abmessungen im Bereich von mehreren Millimetern gerechnet werden. Bei anderen Produkten, wie zum Beispiel bei Fleischstücken oder bei Fischfilets, muss sogar mit noch grösseren Abweichungen der Abmessungen und auch der Konturen von der Norm gerechnet werden. Hinzu kommt, dass die Eigenschaften der verschiedenen Lebensmittel im Sinne von klassischen Materialeigenschaften wie etwa Dichte, Härte, Duktilität, Sprödigkeit und Oberflächenbeschaffenheit in einer grossen Bandbreite variieren.

Ein sehr präzise Greifvorrichtung, wie sie oben für den industriellen Maschinen- und Apparatebau und in der industriellen Fertigung in diesem Bereich eingesetzt wird, welche mit einer fest vorgegebenen Kraft eine Stellbewegung auf den hundertstel Millimeter genau ausführt, ist für Anwendungen im Lebensmittelbereich daher vollständig ungeeignet, einmal ganz abgesehen von den hygienischen Anforderungen der Lebensmittelindustrie.

Deshalb werden in der Lebensmittelindustrie ausser Greifvorrichtungen mit bewegten Fingern auch Vakuumgreifer eingesetzt. Da in der Lebensmittelindustrie oftmals aber keine vollständige Abdichtung zwischen dem Saugkopf des Vakuumgreifers und dem zu greifenden Produkt möglich ist, ist der Energiebedarf für die Bereitstellung des erforderlichen Unterdrucks bei Vakuumgreifern in der Lebensmittelindustrie generell sehr gross. Ein weiteres Problem bei Vakuumgreifern in der Lebensmittelindustrie besteht hinsichtlich der geforderten Hygiene und hinsichtlich des Umstands, dass Teile des angesaugten Produktes in den Vakuumkreislauf gelangen können. Insbesondere bei noch warmen und somit besonders empfindlichen Produkten der Lebensmittelindustrie ist es oftmals nicht möglich, unerwünschte Abdrücke auf dem zu greifenden Produkt zu vermeiden. Ausserdem kann der Greifvorgang nur sehr beschränkt kontrolliert werden, da der Aufbau bzw. Abbau des Unterdrucks stark vom Grad der möglichen Abdichtung zwischen Saugkopf und dem zu greifenden Produkt abhängt.

Magnetische Greifvorrichtungen sind auf ferromagnetische zu greifende Teile oder Objekte beschränkt, sie lassen sich somit grundsätzlich nicht in der Lebensmittelindustrie einsetzen. Ähnliche Anforderungen wie für Lebensmittel gelten ganz oder teilweise auch für pharmazeutische Produkte.

Vor diesem Hintergrund liegt der Erfindung die Aufgabe zugrunde, eine Vorrichtung zum Greifen von Lebensmitteln und ein System zum Greifen und Transportieren von Lebensmitteln bereitzustellen, die es ermöglichen, die oben genannten Nachteile zu beseitigen.

Die gemäß dem beigefügten Anspruch 1 ausgebildete Vorrichtung zum Greifen von Lebensmitteln oder pharmazeutischen Produkten umfasst
- wenigstens zwei ortsfeste, fest miteinander verbundene, und parallel angeordnete gerade Führungsstangen aus Edelstahl,
- einen ersten Greiferwagen mit einem daran befestigten ersten Greiferarm, und
- einen zweiten Greiferwagen mit einem daran befestigten zweiten Greiferarm.

Der erste und der zweite Greiferwagen besteht jeweils aus einem nicht-korrosiven Material, insbesondere nicht-korrosiven Kunststoff, und der erste und der zweite Greiferarm besteht jeweils ebenfalls aus einem nicht-korrosiven Material, insbesondere Edelstahl. Der erste und der zweite Greiferwagen ist jeweils auf den wenigstens zwei Führungsstangen angeordnet, wobei zumindest der erste Greiferwagen entlang der wenigstens zwei Führungsstangen bewegbar ist. Weiterhin umfasst die erfindungsgemässe Vorrichtung
- einen ersten, insbesondere tubularen, Linearmotor, umfassend
- einen ersten Stator, der flüssigkeitsdicht von einer Ummantelung aus einem nicht-korrosiven Material, insbesondere Edelstahl, umschlossen ist, und
- einen relativ zum ersten Stator bewegbar angeordneten ersten Läufer, der ein flüssigkeitsdichtes Läuferrohr aus einem nicht-korrosiven Material, insbesondere Edelstahl, aufweist, in welchem Permanentmagnete angeordnet sind.

Der erste Läufer ist mit dem ersten Greiferwagen fest verbunden und der erste Stator ist mit zumindest einer der wenigstens zwei Führungsstangen fest verbunden, zur Bewegung des ersten Greiferwagens entlang der wenigstens zwei Führungsstangen durch Bewegen des ersten Läufers relativ zum ersten Stator.

Linearmotoren sind zum Bewegen von Greiferarmen zum Greifen von Lebensmitteln besonderes geeignet, da sie die zum Greifen von Lebensmitteln benötigte Kraft in kontrollierbarer Weise aufbringen können und einfach anzusteuern sind. Ein für den Einsatz im Lebensmittelbereich geeigneter Linearmotor ist beispielsweise in der EP 3 790 172 A1 beschrieben. Der Einsatz von solchen Linearmotoren zum Bewegen der Greiferarme ist insofern vorteilhaft, als sie eine einfache Reinigung erlauben. Ausserdem wird die vom Linearmotor erzeugte Kraft ohne Umlenkungselemente wie Riemen, Getriebe oder Spindeln vom Läufer (also quasi direkt) bereitgestellt. Entsprechend treten auch die für die solche Umlenkungselemente typischen Verluste erst gar nicht auf. Somit entspricht die vom Läufer bereitgestellte Kraft - unter Vernachlässigung geringfügiger Reibungsverluste - weitgehend der vom Linearmotor erzeugten Kraft. Die Patentdokumente US11542103B1 und US2013134726A1 offenbaren verschiedene Beispiele für Vorrichtungen zum Greifen von Lebensmitteln oder pharmazeutischen Produkten.

Der Einsatz von nicht-korrosiven Materialien ermöglicht den Einsatz der Vorrichtung zum Greifen im Lebensmittelbereich und auch im Bereich von pharmazeutischen Produkten, wobei nachfolgend der Einfachheit halber jeweils nur auf den Lebensmittelbereich Bezug genommen wird. Insbesondere wird dadurch eine Reinigung mit den üblicherweise im Lebensmittelbereich eingesetzten und oftmals säurehaltigen Reinigungsmittel ermöglicht. Edelstahl ist insbesondere für die Führungsstangen von Vorteil, da Edelstahl neben der benötigten Resistenz gegen Reinigungsmittel die nötige Stabilität bietet, um die beiden Greiferwagen zu tragen und zu führen. Entsprechend ist auch für den Stator und den Läufer des Linearmotors der Einsatz von Edelstahl von Vorteil, da Edelstahl die benötigte Stabilität aufweist, um den Stator fest mit zumindest einer der wenigstens zwei Führungsstangen zu verbinden und den Läufer fest mit dem ersten Greiferwagen zu verbinden. Für die Greiferwagen ist hingegen ein nicht-korrosiver Kunststoff besonders vorteilhaft, zum einen aus Gewichtsgründen (ein leichter Greiferwagen ermöglicht ein schnelles Verfahren des Greiferwagens mit einem geringen Kraftaufwand) und zum anderen aus Kostengründen. Ein geeigneter nicht-korrosiver Kunststoff ist beispielsweise Polyoxymethylen (POM).

Die Anordnung der Greiferwagen auf wenigstens zwei Führungsstangen erlaubt eine Anordnung der Greiferwagen, die einerseits stabil gegen eine Rotation der Greiferwagen um die Längsrichtung der wenigstens zwei Führungsstangen ist und andererseits auch stabil gegen eine Neigung der Greiferwagen in Längsrichtung der beiden Führungsstangen ist. In einem Ausführungsbeispiel sind die wenigstens zwei Führungsstangen übereinander angeordnet, wobei dabei die Greifarme nach unten ausgerichtet und unterhalb der wenigstens zwei übereinander angeordneten Führungsstangen angeordnet sind. Dadurch werden beim Greifvorgang die aufgrund der Hebelwirkung von den Greifarmen auf die Greiferwagen wirkende Kräfte auf die beiden übereinander angeordneten Führungsstangen verteilt. Insbesondere bei solchen Ausführungsbeispielen, bei denen die Greiferwagen mittels eines Gleitlagers auf den wenigstens zwei Führungsstangen angeordnet sind, werden dadurch die Gleitlager geschont. Entsprechend werden bei einer alternativen Anordnung der Greiferwagen auf den Führungsstangen mittels einer alternativen Lagerung der Greiferwagen, besipielsweise mittels Linearkugellager oder Rollen, die Linearkugellager oder Rollen geschont.

Die feste Anordnung der Greiferarme an den Greiferwagen bietet den Vorteil, dass die beim Greifvorgang auf die beiden Greiferarme wirkende Hebelkraft auf die Führungsstangen übertragen wird, anstatt beispielsweise direkt auf den Läufer des Linearmotors zu wirken. Dadurch wird vermieden, dass die Kraft von den Greiferarmen auf den Läufer des Linearmotors übertragen wird, wodurch der Läufer oder die damit verbundene Halterung verkanten könnte.

Eine ortsfeste Anordnung der wenigsten zwei Führungsstangen ist als ortsfest in Bezug auf die Vorrichtung zum Greifen selbst zu verstehen, und nicht bezüglich des zu greifenden Produkts. Eine parallele Anordnung der wenigstens zwei Führungsstangen erlaubt ein einfaches Bewegen des erstens Greiferwagens entlang der Führungsstangen (oder, falls auch der zweite Greiferwagen entlang der Führungsstangen bewegbar ist, auch des zweiten Greiferwagens).

Der Stator ist mit zumindest einer der wenigstens zwei Führungsstangen fest verbunden, kann aber auch mit beiden (bzw. allen) Führungsstangen fest verbunden sein. Dabei soll fest verbunden in diesem Zusammenhang heissen, dass der Stator relativ zu den Führungsstangen nicht bewegbar ist, aber grundsätzlich verstellbar ist in Bezug auf die Position in Längsrichtung der Führungsstangen, in welcher der Stator mit zumindest einer der Führungsstangen verbunden ist. Das heisst, dass der Stator an verschiedenen Positionen in Längsrichtung der Führungsstangen angeordnet werden kann und an der jeweiligen Position fest mit den Führungsstangen verbunden ist und dann nicht relativ zu den Führungsstangen bewegbar ist. In Ausführungsbeispielen kann der Stator beispielsweise mittels eines Montageblocks fest mit den Führungsstangen verbunden sein, wobei der Montageblock zur Montage der Greifvorrichtung an einer Transportvorrichtung dient und zudem auch noch zum festen Verbinden der wenigsten zwei Führungsstangen miteinander. Entsprechend kann dann die Position des Stators relativ zu den wenigstens zwei Führungsstangen in Längsrichtung der Führungsstangen verstellt werden durch Verstellen der Position des Stators relativ zum Montageblock.

Dadurch ist die Vorrichtung auch zum Greifen von Produkten verschiedener Grössen geeignet. Durch das Verstellen der Position des Stators in Längsrichtung der beiden Führungsstangen lässt sich die erfindungsgemässe Vorrichtung an die Grösse des zu greifenden Produkts anpassen. Die erfindungsgemässe Vorrichtung kann somit zum Greifen von Produkten verschiedener Grössen, wie beispielsweise einer Pizza oder einer Olive, eingesetzt werden, ohne dass die Linearmotoren ausgetauscht werden oder Linearmotoren mit einem unverhältnismässig grossen Hub eingesetzt werden müssen. Gemäss der Erfindung ist auch der zweite Greiferwagen entlang der wenigstens zwei Führungsstangen bewegbar (sodass sowohl der erste als auch der zweite Greiferwagen entlang der Führungsstangen bewegbar ist), wobei die Vorrichtung weiterhin einen zweiten, insbesondere tubularen, Linearmotor aufweist. Der zweite Linearmotor umfasst
- einen zweiten Stator, der flüssigkeitsdicht von einer Ummantelung aus einem nicht-korrosiven Material, insbesondere Edelstahl, umschlossen ist, und
- einen relativ zum zweiten Stator bewegbar angeordneten zweiten Läufer, der ein flüssigkeitsdichtes Läuferrohr aus einem nicht-korrosiven Material, insbesondere Edelstahl, aufweist, in welchem Permanentmagnete angeordnet sind.

Der zweite Läufer ist mit dem zweiten Greiferwagen fest verbunden und der zweite Stator ist mit zumindest einer der wenigstens zwei Führungsstangen fest verbunden, zur Bewegung des zweiten Greiferwagens entlang der wenigstens zwei Führungsstangen durch Bewegen des zweiten Läufers relativ zum zweiten Stator.

Dadurch, dass sowohl der erste als auch der zweite Greiferwagen bewegbar ist und der zweite Greiferwagen durch einen separaten zweiten Linearmotor angetrieben wird, lassen sich sowohl der erste als auch der zweite Greiferarm separat und unabhängig voneinander ansteuern und bewegen. Die Bewegbarkeit beider Greiferwagen und somit auch beider Greiferarme erlaubt ein Greifen von Produkten, ohne dass zum Greifen die gesamte Vorrichtung zum Greifen des Produkts bewegt werden muss, wie das bei einer festen Anordnung des zweiten Greiferwagens auf den Führungsstangen der Fall sein kann. Beispielsweise ist dies der Fall, wenn eine an dem Greiferarm befestigte Greiferbacke in eine Position unterhalb des zu greifenden Produkts gefahren werden muss, um das Produkt zu greifen.

Dadurch, dass der erste und der zweite Greiferwagen durch separate Linearmotoren angetrieben werden, die wiederum separat ansteuerbar sind, lassen sich also auch der erste und der zweite Greiferarm individuell bewegen. Dadurch ist auch eine asymmetrische Bewegung der beiden Greiferarme möglich, was beispielsweise beim Greifen von nahe beieinander angeordneten zu greifenden Produkten von Vorteil sein kann oder wenn einer der beiden Greiferarme aufgrund von anderweitigen räumlichen Gegebenheit nur limitiert bewegt werden kann. Darüber hinaus kann das gegriffene Produkt auch im Rahmen des möglichen Bewegungsbereichs der Greiferwagen linear verschoben werden.

Vorzugsweise sind der erste und der zweite Linearmotor derart relativ zueinander angeordnet, dass der erste und der zweite Läufer parallel zueinander, aber in entgegengesetzten Richtungen jeweils in Richtung der Längsachse der Führungsstangen bewegbar sind. Insbesondere sind der erste und der zweite Stator in Ausführungsbeispielen aus Gründen der Platzersparnis zumindest teilweise in einem Bereich in Längsrichtung der Führungsstangen zwischen dem ersten Greiferwagen und dem zweiten Greiferwagen angeordnet.

Gemäss einem weiteren Aspekt der erfindungsgemässen Vorrichtung sind die wenigstens zwei Führungsstangen hohl und weisen ein kreisrundes Querschnittsprofil auf. Zumindest der erste Greiferwagen und gegebenenfalls auch der zweite Greiferwagen ist mittels Gleitlagern auf den wenigstens zwei Führungsstangen angeordnet.

Hohle Führungsstangen sind aus Gründen der Gewichtsersparnis und auch aus Kostengründen von Vorteil. Eine leichtere Vorrichtung lässt sich einfacher und mit einem geringeren Kraft- und Energieaufwand verfahren. Führungsstangen mit einem kreisrunden Querschnittsprofil lassen sich im Vergleich zu Führungsstangen mit einem anderen Querschnittsprofil mit hoher Präzision kostengünstig herstellen und weisen zudem eine hohe Stabilität auf.

Eine Anordnung der Greiferwagen auf den Führungsstangen mittels Gleitlager hat zum Vorteil, dass sich Gleitlager einfach reinigen lassen. Vorteilhafterweise umfasst jedes der Gleitlager zumindest eine Schicht aus einem abriebfesten Kunststoff.

Gemäss einem weiteren Aspekt der erfindungsgemässen Vorrichtung ist am ersten Greiferarm eine erste Greiferbacke und am zweiten Greiferarm eine zweite Greiferbacke befestigt. Die erste Greiferbacke und die zweite Greiferbacke besteht jeweils aus einem nicht-korrosiven Material, insbesondere nicht-korrosivem Kunststoff.

Die Greiferbacken ermöglichen ein einfaches Greifen des zu greifenden Produkts. Ein nicht-korrosiver Kunststoff als Material aus dem die Greiferbacken bestehen, hat zum Vorteil, dass die Greiferbacken eine verhältnismässig geringe Masse aufweisen, was die gesamte zu bewegende Masse des jeweiligen Greiferarms gering hält. Ausserdem lassen sich Greiferbacken aus Kunststoff kostengünstig herstellen, was dahingehend von Vorteil ist, dass Greiferbacken typischerweise austauschbar sind und je nach Anwendung in Grösse und Form angepasst werden können.

Die Greiferbacken können zum Beispiel Backenteile umfassen, die unter das zu greifende Produkt bewegt werden können. In diesem Fall wird das das Produkt nicht nur über Reibungskräfte zwischen den Greiferbacken und dem Produkt gehalten, sondern wird zudem an der Unterseite des Produkts angehoben und unterstützt.

Gemäss einem weiteren Aspekt der erfindungsgemässen Vorrichtung ist der erste Greiferarm und der zweite Greiferarm jeweils als eine oder mehrere Stangen ausgebildet.

Eine Ausbildung des Greiferarms als (nur) eine Stange hat zum Vorteil, dass Kosten und Gewicht gespart werden können. Eine Ausbildung des Greiferarms als mehrere Stangen hat zum Vorteil, dass ein solcher Greiferarm stabiler gegen Verdrehung ist, wenn beim Greifvorgang Kräfte dezentral auf die Greiferbacke wirken und ein auf den Greiferarm wirkendes Drehmoment erzeugen. Der jeweilige Greiferarm kann insbesondere als zwei Stangen ausgebildet sein.

Gemäss einem weiteren Aspekt der erfindungsgemässen Vorrichtung umfasst der erste Greiferarm oder der zweite Greiferarm, oder beide, einen Kraftsensor, zur Messung einer in Längsrichtung der wenigstens zwei Führungsstangen auf den jeweiligen Greiferarm wirkenden Kraft.

Durch den Kraftsensor bzw. die Kraftsensoren kann die auf das zu greifende Produkt ausgeübte Kraft gemessen werden, und die auf das zu greifende Produkt ausgeübte Kraft kann durch entsprechende Ansteuerung der Linearmotoren auf einen vorgegebenen Wert eingestellt werden. Dies ist insbesondere im Lebensmittelbereich von Vorteil, da die meisten Lebensmittel empfindlich gegenüber mechanischen Kräften sind. Zur Messung der Kraft mittels des Kraftsensors können die Greiferarme als Scherbalken oder als Biegebalken ausgeführt sein. Im Unterschied zur Messung der Kraft durch in den Greiferbacken angeordnete Kraftsensoren ist die Anordnung der Kraftsensoren in den Greiferarmen insofern vorteilhaft, als die Greiferbacken austauschbar ausgebildet sein können, sodass beim Austauschen der Greiferbacken der jeweilige Kraftsensor nicht mit ausgetauscht werden muss. Somit können die Greiferbacken einfach und kostengünstig ausgebildet sein. Für die Messung der bei vollständig erfolgtem Greifvorgang auf das Produkt ausgeübten Kraft genügt es prinzipiell, wenn nur einer der Greiferarme mit einem Kraftsensor ausgestattet ist. Eine Anordnung von jeweils einem Kraftsensor in jedem der Greiferarme ist insofern von Vorteil, als die Kraft auf die Greiferarme bereits vor dem vollständig erfolgten Greifvorgang, also vor vollständigem Schliessen der Greiferarme, gemessen werden kann, insbesondere wenn zunächst nur einer der Greiferarme mit dem zu greifenden Produkt in Berührung kommt. In Abhängigkeit der gemessenen Kraft kann dann jeweils der erste Linearmotor oder der zweite Linearmotor während des Greifvorgangs entsprechend angesteuert werden.

Gemäss einem weiteren Aspekt der erfindungsgemässen Vorrichtung umfasst die Vorrichtung weiterhin mindestens einen Montageblock zur Montage der Vorrichtung an einer Transportvorrichtung. Durch den mindestens einen Montageblock sind auch die wenigstens zwei Führungsstangen fest miteinander verbunden.

Typischerweise wird das Produkt nach dem Greifen auch noch transportiert. Mit der Vorrichtung zum Greifen alleine ist dies in Längsrichtung der Führungsstangen möglich (nämlich im Rahmen des möglichen Bewegungsbereichs der Greiferwagen). Mittels des Montageblocks kann die Vorrichtung zum Greifen jedoch zusätzlich noch an eine Transportvorrichtung montiert werden, wodurch eine Bewegung der Vorrichtung zum Greifen und somit ein Transport der gegriffenen Produkte in wesentlich grösserem Umfang und auch in anderen Richtungen ermöglicht wird. Durch das feste Verbinden der Führungsstangen mittels des Montageblocks wird zum einen sichergestellt, dass die Kraft der Transportvorrichtung an allen Führungsstangen angreift und nicht nur an einer einzelnen Führungsstange, wodurch die Kraft auf alle Führungsstangen verteilt wird. Ausserdem kann auf diese Weise auf weitere Verbindungselemente zum festen Verbinden der wenigsten zwei Führungsstangen weitgehend verzichtet werden.

Gemäss einem weiteren Aspekt der erfindungsgemässen Vorrichtung sind der erste Stator des ersten Linearmotors und der zweite Stator des zweiten Linearmotors jeweils in Längsrichtung der wenigstens zwei Führungsstangen und parallel zueinander angeordnet und derart mit den wenigstens zwei Führungsstangen fest verbunden, dass der erste Stator und der zweite Stator in Längsrichtung der wenigstens zwei Führungsstangen zumindest teilweise überlappen. Der mindestens eine Montageblock weist nur einen einzigen Montageblock auf und sowohl der erste Stator als auch der zweite Stator ist mittels des einzigen Montageblocks fest mit den wenigstens zwei Führungsstangen verbunden.

Die in Längsrichtung der Führungsstangen überlappende Anordnung des ersten Stators und des zweiten Stators, wobei beide Statoren durch den einzigen Montageblock mit den Führungsstangen fest verbunden sind, erlaubt eine platzsparende Konstruktion der Vorrichtung zum Greifen. Fest verbunden heisst auch hier, dass die beiden Statoren durch den Montageblock relativ zu den Führungsstangen nicht beweglich sind, aber grundsätzlich verstellbar sind in Bezug auf die Position in Längsrichtung der Führungsstangen, in der die Statoren mit den Führungsstangen (durch den Montageblock) verbunden sind. Entsprechend lassen sich die Position, in der die beiden Statoren in Längsrichtung der Führungsstangen mit den Führungsstangen fest verbunden ist, so einstellen, dass die Positionen der Greiferarme an die Grösse beziehungsweise Abmessungen des zu greifenden Produkts angepasst sind.

Gemäss einem weiteren Aspekt der erfindungsgemässen Vorrichtung sind der erste Stator des ersten Linearmotors und der zweite Stator des zweiten Linearmotors jeweils in Längsrichtung der wenigstens zwei Führungsstangen und parallel zueinander angeordnet und derart mit den wenigstens zwei Führungsstangen fest verbunden, dass der erste Stator und der zweite Stator in Längsrichtung der wenigstens zwei Führungsstangen voneinander beabstandet sind. Der mindestens eine Montageblock weist einen ersten Montageblock und einen zweiten, vom ersten Montageblock verschiedenen, Montageblock auf. Der erste Stator ist mittels des ersten Montageblocks fest mit den wenigstens zwei Führungsstangen verbunden und der zweite Stator ist mittels des zweiten Montageblocks fest mit den wenigstens zwei Führungsstangen verbunden.

Eine solche Anordnung der Statoren erweist sich als vorteilhaft zum Greifen von Produkten, deren Grösse es nicht ermöglicht, den ersten und zweiten Linearmotor an einem einzigen Montageblock zu befestigen, weil ansonsten der benötigte Hub der Linearmotoren sehr gross wäre und entsprechend grosse (und daher aufwändige) Linearmotoren benötigt würden. Durch die zwei voneinander beabstandeten verschiedenen Montageblöcke, nämlich des ersten Montageblocks, mittels dem der erste Stator (des ersten Linearmotors) mit den Führungsstangen verbunden ist, und des zweiten Montageblocks, mittels dem der zweite Stator (des zweiten Linearmotors) mit den Führungsstangen verbunden ist, ist es möglich, kleinere (und daher weniger aufwändige) Linearmotoren mit kleinerem Hub zu verwenden. Weiterhin ist die feste Verbindung der beiden Führungsstangen miteinander mittels sowohl des ersten Montageblocks als auch des zweiten Montageblocks auch vorteilhaft in Bezug auf eine hohe Stabilität.

Gemäss der Erfindung ist der erste Läufer des ersten Linearmotors aus einer in den ersten Stator eingefahrenen Anordnung in eine aus dem ersten Stator herausgefahrene Anordnung und wieder zurück in die eingefahrene Anordnung bewegbar, und der zweite Läufer des zweiten Linearmotors ist aus einer in den zweiten Stator eingefahrenen Anordnung in eine aus dem zweiten Stator herausgefahrene Anordnung und wieder zurück in die eingefahrene Anordnung bewegbar, derart, dass beim Bewegen des ersten und des zweiten Läufers aus dem ersten Stator beziehungsweise aus dem zweiten Stator heraus der erste Greiferwagen und der zweite Greiferwagen voneinander weg bewegt werden.

Bei dieser Anordnung lassen sich die beiden Statoren (der erste und der zweite Stator) der beiden Linearmotoren (des ersten Linearmotors und des zweiten Linearmotors) zumindest teilweise in Längsrichtung der Führungsachsen zwischen den beiden Greiferwagen und somit platzsparend anordnen.

Gemäss einem weiteren Aspekt der erfindungsgemässen Vorrichtung sind der erste oder der zweite Linearmotor, oder beide, tubulare Linearmotoren.

Ein tubularer Linearmotor weist im Querschnitt ein kreiszylindrisches Hohlprofil des Stators sowie ein entsprechendes kreiszylindrisches Aussenprofil des Läufers auf. Tubulare Linearmotoren sind einfach und zuverlässig herzustellende Linearmotoren, die eine hohe Stabilität aufweisen. Sie sind in vielen Anwendungen von Linearmotoren Standard. Gemäss einem weiteren Aspekt der erfindungsgemässen Vorrichtung umfassen der erste Greiferwagen oder der zweite Greiferwagen, oder beide, eine Aussparung, die sich in Längsrichtung der wenigstens zwei Führungsstangen erstreckt. Die Aussparung ist an einer jeweiligen Seite des ersten Greiferwagens oder des zweiten Greiferwagens angeordnet, die dem ersten Stator des ersten Linearmotors zugewandt ist.

Die Aussparung umgibt im Fall einer Überlappung des ersten Greiferwagens oder des zweiten Greiferwagens mit dem ersten Stator in der Längsrichtung der wenigstens zwei Führungsstangen den ersten Stator teilweise, um eine Berührung des ersten Greifwagens oder des zweiten Greiferwagens mit dem ersten Stator zu vermeiden.

Gemäss einem weiteren Aspekt der erfindungsgemässen Vorrichtung umfassen der erste Greiferwagen oder der zweite Greiferwagen, oder beide, eine weitere Aussparung, die sich in Längsrichtung der wenigstens zwei Führungsstangen erstreckt. Die weitere Aussparung ist an einer jeweiligen weiteren Seite des ersten Greiferwagens oder des zweiten Greiferwagens angeordnet, die dem zweiten Stator des zweiten Linearmotors zugewandt ist.

Die weitere Aussparung umgibt im Fall einer Überlappung des ersten oder des zweiten Greiferwagens mit dem zweiten Stator in Längsrichtung der wenigstens zwei Führungsstangen den zweiten Stator teilweise, um eine Berührung des ersten Greiferwagens oder des zweiten Greiferwagens mit dem zweiten Stator zu vermeiden.

Die Aussparung und/oder die weitere Aussparung ermöglicht eine kompakte Bauweise der Vorrichtung zum Greifen. Insbesondere ermöglicht die jeweilige Aussparung eine Anordnung, in der der jeweilige Stator (also der erste Stator oder der zweite Stator, oder beide) in einer Richtung senkrecht zu der Längsrichtung der Führungsstangen mit den Führungsstangen überlappend angeordnet ist und beispielsweise teilweise zwischen die wenigsten zwei Führungsstangen hineinragt. Eine derartige Anordnung ist zudem vorteilhaft für die Übertragung der Kraft vom Läufer auf den Greiferwagen, da dadurch der Hebelarm zur Übertragung der Kraft vom jeweiligen Läufer auf den zugehörigen Greiferwagen minimiert wird (also der Angriffspunkt des jeweiligen Läufers am jeweiligen Greiferwagen möglichst zentral ist). Entsprechend wird auch ein allfälliges durch das exzentrische Angreifen des Läufers auf den zugehörigen Greiferwagen wirkende Drehmoment minimiert, was die Gleitlager des jeweiligen Greiferwagens schont und auch die Gefahr eines Verkantens des jeweiligen Greiferwagens auf den Führungsstangen vermindert.

Gemäss einem weiteren Aspekt der erfindungsgemässen Vorrichtung sind der erste Stator, oder der zweite Stator, oder beide, jeweils an verschieden Positionen in Längsrichtung der wenigstens zwei Führungsstangen positionierbar. Der jeweilige Stator ist in jeweils einer der verschiedenen Positionen fest mit wenigstens einer der wenigstens zwei Führungsstangen verbunden.

Dies hat zum Vorteil, dass sich die Vorrichtung an zu greifende Produkte verschiedener Grössen und Abmessungen anpassen lässt, und zwar ohne dass die Linearmotoren ausgetauscht werden müssen. In Produktionslinien, in denen Lebensmittel verschiedener Grösse hergestellt oder verarbeitet werden, muss somit nur eine Vorrichtung zum Greifen installiert werden, die sich für Produkte verschiedener Grösse und Abmessungen einfach anpassen lässt.

Wie bereits erwähnt, kann der zweite Greiferwagen in Längsrichtung der entlang der wenigsten zwei Führungsstangen bewegbar angeordnet sein. Gemäss einem weiteren Aspekt der erfindungsgemässen Vorrichtung ist der zweite Greiferwagen jedoch fest auf den wenigstens zwei Führungsstangen angeordnet.

In Ausführungsbeispielen, bei denen der zweite Greiferwagen fest auf den wenigstens zwei Führungsstangen angeordnet ist, wird lediglich ein Linearmotor (nämlich der erste Linearmotor zum Bewegen des ersten Greiferwagens) benötigt. Dadurch lassen sich Kosten und Gewicht einsparen, wodurch die Vorrichtung zum Greifen schneller und energiesparender durch eine entsprechende Transportvorrichtung bewegt werden kann.

Gemäss einem weiteren Aspekt der erfindungsgemässen Vorrichtung sind der erste Greiferarm oder der zweite Greiferarm, oder beide, zweiteilig ausgebildet. Ein erster Teil des zweiteiligen Greiferarms umfasst den Kraftsensor. Ein zweiter Teil des zweiteiligen Greiferarms weist eine Armverlängerung auf, die lösbar mit dem ersten Teil verbunden ist.

Diese zweiteilige Ausbildung des Greiferarms hat zum Vorteil, dass der der zweite Teil des Greiferarms, durch den letztendlich die Länge des Greiferarms bestimmt wird, einfach und kostengünstig ausgebildet sein kann und ausgetauscht werden kann, um Greiferarme mit unterschiedlichen Längen zu bilden, während der erste Teil mit den Kraftsensoren nicht ausgetauscht werden muss.

Gemäss einem weiteren Aspekt der erfindungsgemässen Vorrichtung umfasst die Vorrichtung weiterhin
- einen dritten Greiferwagen mit einem daran befestigten dritten Greiferarm, und
- einen vierten Greiferwagen mit einem daran befestigten vierten Greiferarm.

Der dritte und der vierte Greiferwagen besteht aus einem nicht-korrosiven Material, insbesondere nicht-korrosiven Kunststoff, und der dritte und der vierte Greiferarm besteht jeweils ebenfalls aus einem nicht-korrosiven Material, insbesondere Edelstahl. Der dritte und der vierte Greiferwagen ist jeweils auf den wenigstens zwei Führungsstangen angeordnet, und zumindest der dritte Greiferwagen ist entlang der wenigstens zwei Führungsstangen bewegbar. Der erste und der zweite Greiferwagen sowie der dritte und der vierte Greiferwagen sind jeweils paarweise zueinandergehörend auf den wenigstens zwei Führungsstangen angeordnet. Weiterhin umfasst die Vorrichtung
- einen dritten, insbesondere tubularen, Linearmotor, umfassend
- einen dritten Stator, der flüssigkeitsdicht von einer Ummantelung aus einem nicht-korrosiven Material, insbesondere Edelstahl, umschlossen ist, und
- einen relativ zum dritten Stator bewegbar angeordneten dritten Läufer, der ein flüssigkeitsdichtes Läuferrohr aus einem nicht-korrosiven Material, insbesondere Edelstahl, aufweist, in welchem Permanentmagnete angeordnet sind.

Der dritte Läufer ist mit dem dritten Greiferwagen fest verbunden und der dritte Stator ist mit zumindest einer der wenigstens zwei Führungsstangen fest verbunden, zur Bewegung des dritte Greiferwagens entlang der wenigstens zwei Führungsstangen durch Bewegen des dritten Läufers relativ zum dritten Stator.

Dies hat zum Vorteil, dass zwei Produkte zugleich mit der Vorrichtung gegriffen und transportiert werden können.

Gemäss einem weiteren Aspekt der erfindungsgemässen Vorrichtung ist auch der vierte Greiferwagen entlang der wenigstens zwei Führungsstangen bewegbar, und die Vorrichtung weist weiterhin einen vierten, insbesondere tubularen, Linearmotor auf. Der vierte Linearmotor umfasst
- einen vierten Stator, der flüssigkeitsdicht von einer Ummantelung aus einem nicht-korrosiven Material, insbesondere Edelstahl, umschlossen ist, und
- einen relativ zum vierten Stator bewegbar angeordneten vierten Läufer, der ein flüssigkeitsdichtes Läuferrohr aus einem nicht-korrosiven Material, insbesondere Edelstahl, aufweist, in welchem Permanentmagnete angeordnet sind.

Der vierte Läufer ist mit dem vierten Greiferwagen fest verbunden und der vierte Stator ist mit zumindest einer der wenigstens zwei Führungsstangen fest verbunden, zur Bewegung des vierten Greiferwagens entlang der wenigstens zwei Führungsstangen durch Bewegen des vierten Läufers relativ zum vierten Stator.

Dadurch, dass sowohl der dritte und der vierte Greiferwagen bewegbar sind und durch einen separaten dritten bzw. vierten Linearmotor angetrieben werden, lassen sich auch der dritte und der vierte Greiferarm unabhängig voneinander bewegen. Die Bewegbarkeit sowohl des dritten als auch des vierten Greiferwagens und damit des dritten und vierten Greiferarms erlaubt ein Greifen von Objekten, ohne dass zum Greifen die gesamte Vorrichtung zum Greifen des Produktes bewegt werden muss, wie das bei einer ortsfesten Anordnung des vierten Greiferwagens und damit des vierten Greiferarms der Fall sein kann. Die Erläuterungen weiter oben bezüglich des bewegbaren zweiten Greiferwagens und damit des zweiten Greiferarms geltend entsprechend für den vierten Greiferwagen und damit den vierten Greiferarm.

Das erfindungsgemässe System zum Greifen und Transportieren von Lebensmitteln oder pharmazeutischen Produkten umfasst eine Vorrichtung zum Greifen von Lebensmitteln oder pharmazeutischen Produkten, wie sie vorstehend beschrieben ist und eine Transportvorrichtung. Die Vorrichtung zum Greifen von Lebensmitteln oder pharmazeutischen Produkten ist mittels des mindestens einen Montageblocks an der Transportvorrichtung montiert.

Ein derartiges System bietet dieselben Vorteile wie die erfindungsgemässe Vorrichtung zum Greifen von Lebensmitteln oder pharmazeutischen Produkten, die an dieser Stelle nicht wiederholt werden. Durch die Transportvorrichtung lässt sich das mit der Greifvorrichtung gegriffene Produkt an einen gewünschten Ort transportieren (im Rahmen des möglichen Bewegungsbereichs der Transportvorrichtung).

Weitere vorteilhafte Aspekte und Ausgestaltungen ergeben sich aus der nachfolgenden Beschreibung von Ausführungsbeispielen der Erfindung mit Hilfe der schematischen Zeichnungen. Es zeigen:
- Fig. 1: eine perspektivische Ansicht eines ersten Ausführungsbeispiels der erfindungsgemässen Vorrichtung zum Greifen von Lebensmitteln;
- Fig. 2: eine perspektivische Ansicht eines zweiten Ausführungsbeispiels der erfindungsgemässen Vorrichtung mit einer ersten Anordnung des ersten und zweiten Greiferwagens;
- Fig. 3: eine perspektivische Ansicht des zweiten Ausführungsbeispiels der erfindungsgemässen Vorrichtung mit einer zweiten Anordnung des ersten und zweiten Greiferwagens;
- Fig. 4: eine perspektivische Ansicht des zweiten Ausführungsbeispiels der erfindungsgemässen Vorrichtung mit einer dritten Anordnung des ersten und zweiten Greiferwagens;
- Fig. 5: eine perspektivische Ansicht eines dritten Ausführungsbeispiels der erfindungsgemässen Vorrichtung;
- Fig. 6: eine perspektivische Ansicht eines vierten Ausführungsbeispiels der erfindungsgemässen Vorrichtung als Teil eines erfindungsgemässen Systems zum Greifen und Transportieren von Lebensmitteln;
- Fig. 7: eine perspektivische Ansicht eines fünften Ausführungsbeispiels der erfindungsgemässen Vorrichtung;
- Fig. 8: eine perspektivische Ansicht eines sechsten Ausführungsbeispiels der erfindungsgemässen Vorrichtung;
- Fig. 9: eine perspektivische Ansicht eines Greiferwagens mit Greiferarm;
- Fig. 10: eine Vorderansicht sowie eine Seitenansicht einer Stange eines Greiferarms;
- Fig. 11: eine perspektivische Ansicht eines Greiferarms mit zwei Stangen gemäss Fig. 10 und einer daran befestigten Greiferbacke;
- Fig. 12: eine perspektivische Ansicht eines weiteren Greiferarms mit nur einer Stange gemäss Fig. 10 und einer daran befestigten Greiferbacke;
- Fig. 13: eine Vorderansicht und eine Seitenansicht einer weiteren Stange eines Greiferarms;
- Fig. 14: eine perspektivische Ansicht eines Greiferarms mit zwei Stangen gemäss Fig. 13 und einer daran befestigten Greiferbacke;
- Fig. 15: eine perspektivische Ansicht eines Greiferarms mit nur einer Stange gemäss Fig. 13 und einer daran befestigten Greiferbacke;
- Fig. 16: eine Seitenansicht einer Stange eines zweiteilig ausgebildeten Greiferarms;
- Fig. 17: eine perspektivische Ansicht eines zweiteilig ausgebildeten Greiferarms mit zwei Stangen gemäss Fig. 16 und einer daran befestigten Greiferbacke; und
- Fig. 18: eine perspektivische Ansicht eines zweiteilig ausgebildeten Greiferarms mit nur einer Stange gemäss Fig. 16 und einer daran befestigtem Greiferbacke.

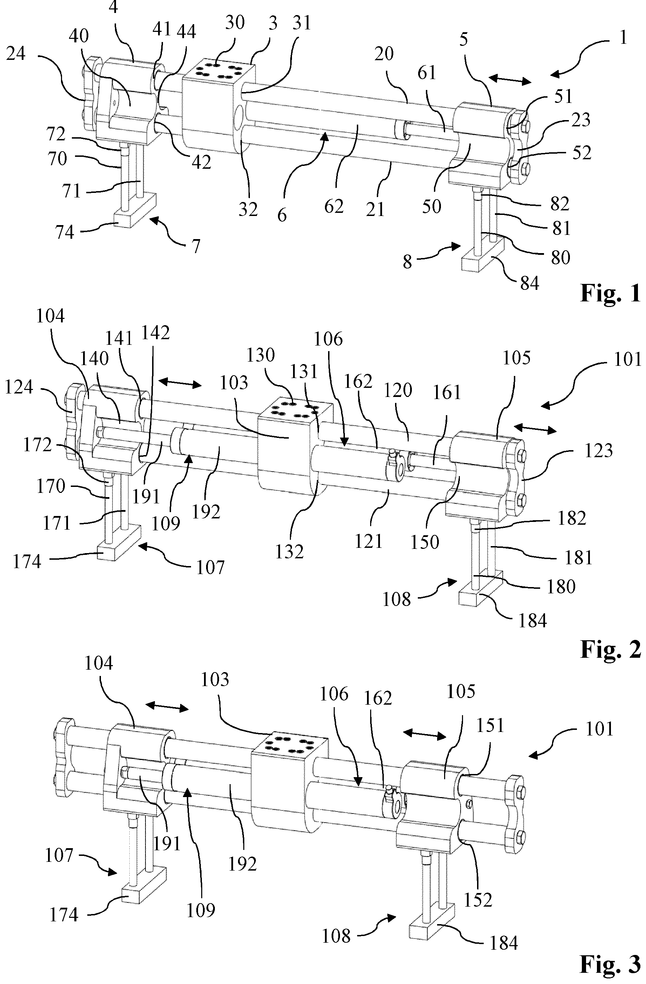

**Fig.** 1 zeigt ein erstes Ausführungsbeispiel einer erfindungsgemässen Vorrichtung 1 zum Greifen von Lebensmitteln. Die Vorrichtung 1 umfasst zwei fest miteinander verbundene, und parallel und übereinander angeordnete gerade Führungsstangen 20, 21 aus Edelstahl. Beide Führungsstangen 20, 21 sind hohl und weisen einen kreisrundes Querschnittsprofil auf. Die beiden Führungsstangen 20, 21 sind über einen Montageblock 3 fest miteinander verbunden, wobei die erste Führungsstange 20 in einer ersten Öffnung 31 fest in dem Montageblock 3 angeordnet ist und die zweite Führungsstange 21 in einer zweiten Öffnung 32 fest in dem Montageblock 3 angeordnet ist. Der Montageblock 3 weist zudem Montagelöcher 30 auf zur Montage der Vorrichtung an einer Transportvorrichtung. Zusätzlich sind die beiden Führungsstangen 20, 21 an deren Längsenden jeweils mit einer Klammer 23, 24 miteinander verbunden zur zusätzlichen Stabilisierung der Führungsstangen 20, 21.

Auf den Führungsstangen 20, 21 sind ein erster Greiferwagen 5 und ein zweiter Greiferwagen 4 angeordnet. Beide Greiferwagen (also sowohl der erste Greiferwagen 5 als auch der zweite Greiferwagen 4) sind aus Polyoxymethylen (POM) hergestellt. Der zweite Greiferwagen 4 ist fest mit den Führungsstangen 20, 21 verbunden, wobei eine erste Öffnung 41 die erste Führungsstange 20 aufnimmt und eine zweite Öffnung 42 die zweite Führungsstange 21 aufnimmt. Der zweite Greiferwagen 4 ist grundsätzlich an verschiedenen Positionen entlang der Führungsstangen 20, 21 positionierbar, ist jedoch an der jeweiligen Position fest (d.h. nicht bewegbar) mit den beiden Führungsstangen 20, 21 verbunden. Der erste Greiferwagen 5 ist entlang der Führungsstangen 20, 21 bewegbar (siehe Doppelpfeil). Hierfür ist der Greiferwagen 5 mittels Gleitlagern auf den beiden Führungsstangen 20, 21 angeordnet, die in zwei kreisrunden Öffnungen 51, 52 des ersten Greiferwagens 5 angeordnet sind, die die beiden Führungsstangen 20, 21 aufnehmen.

Weiterhin umfasst die Vorrichtung 1 einen ersten, z.B. tubularen, Linearmotor 6, der einen ersten Stator 62 und einen relativ zum ersten Stator 62 bewegbar angeordneten ersten Läufer 61 aufweist. Der erste Stator 62 ist flüssigkeitsdicht von einer Ummantelung aus Edelstahl umschlossen. Der erste Läufer 61 weist ein flüssigkeitsdichtes Läuferrohr aus Edelstahl auf, in dem Permanentmagnete (nicht gezeigt) angeordnet sind. Der erste Läufer 61 ist fest mit dem ersten Greiferwagen 5 verbunden, und der erste Stator 62 ist fest mit dem Montageblock 3 und mittels des Montageblocks 3 fest mit den Führungsstangen 20, 21 verbunden. Durch Bewegen des ersten Läufers 61 relativ zum ersten Stator 62 lässt sich der erste Greiferwagen 5 entlang der beiden Führungsstangen 20, 21 bewegen. Der erste Stator 62 ist grundsätzlich an verschieden Positionen entlang der Führungsstangen 20, 21 positionierbar, ist jedoch in der jeweiligen Position fest (d.h. nicht bewegbar) mittels des Montageblocks 3 mit den zwei Führungsstangen 20, 21 verbunden.

Weiterhin umfasst der erste Greiferwagen 5 auf der dem ersten Stator 62 abgewandten Seite eine Aussparung 50, die sich in Längsrichtung der wenigstens zwei Führungsstangen erstreckt. Eine entsprechende weitere Aussparung ist auf der gegenüberliegenden, dem ersten Stator 62 zugewandten Seite des ersten Greiferwagen 5 angeordnet (in Fig. 1 nicht zu sehen). Der zweite Greiferwagen 4 umfasst ebenfalls auf der der dem ersten Stator 62 abgewandten Seite eine Aussparung 40, die sich in Längsrichtung der beiden Führungsstangen 20, 21 erstreckt. Auf der dem ersten Stator 62 zugewandten Seite weist der zweite Greiferwagen ebenfalls eine entsprechende weitere Aussparung 44 auf.

Am ersten Greiferwagen 5 ist ein erster Greiferarm 8 befestigt und am zweiten Greiferwagen 4 ist ein zweiter Greiferarm 7 befestigt. Der erste Greiferarm 8 ist als zwei Stangen 80, 81 ausgebildet, die mittels zweier Befestigungszapfen 82 am ersten Greiferwagen 5 befestigt sind und an denen eine erste Greiferbacke 84 befestigt ist. Entsprechend ist auch der zweite Greiferarm 7 als zwei Stangen 70, 71 ausgebildet, die mittels zweier Befestigungszapfen 72 am zweiten Greiferwagen 4 befestigt sind und an denen eine zweite Greiferbacke 74 befestigt ist.

In der in Fig. 1 gezeigten Anordnung befindet sich der erste, bewegbare Greiferwagen 5 in der Position maximaler Auslenkung.

**Fig.** 2 zeigt ein zweites Ausführungsbeispiel der erfindungsgemässen Vorrichtung zum Greifen von Lebensmitteln mit einer ersten Anordnung des ersten und zweiten Greiferwagens. Die in Fig. 2 gezeigte Vorrichtung 101 umfasst zwei fest miteinander verbundene, und parallel und übereinander angeordnete gerade Führungsstangen 120, 121 aus Edelstahl. Beide Führungsstangen 120, 121 sind hohl und weisen einen kreisrundes Querschnittsprofil auf. Die beiden Führungsstangen 120, 121 sind über einen Montageblock 103 fest miteinander verbunden, wobei die erste Führungsstange 120 in einer ersten Öffnung 131 fest in dem Montageblock 3 angeordnet ist und die zweite Führungsstange 21 in einer zweiten Öffnung 132 fest in dem Montageblock 103 angeordnet ist. Zusätzlich sind die beiden Führungsstange 120, 121 an deren Längsenden jeweils mit einer Klammer 123, 124 miteinander verbunden zur zusätzlichen Stabilisierung der Führungsstangen 120, 121.

Auf den Führungsstangen 120, 121 sind ein erster Greiferwagen 105 und ein zweiter Greiferwagen 104 aus POM angeordnet. Sowohl der erste Greiferwagen 105 als auch der zweite Greiferwagen 104 ist jeweils entlang der Führungsstange 120, 121 bewegbar (siehe Doppelpfeile). Hierfür sind die Greiferwagen 104, 105 mittels Gleitlagern auf den beiden Führungsstangen 120, 121 angeordnet, wobei die zwei kreisrunden Öffnungen 151, 152 (siehe Fig. 3) des ersten Greiferwagens 105, in denen die Gleitlager des ersten Greiferwagens 105 angeordnet sind, sowie die zwei kreisrunden Öffnungen 141, 142 des zweiten Greiferwagens 104, in denen die Gleitlager des zweiten Greiferwagens 104 angeordnet sind, die beiden Führungsstangen 120, 121 aufnehmen.

Weiterhin umfasst die Vorrichtung 101 einen ersten, z.B. tubularen, Linearmotor 106, der einen ersten Stator 162 und einen relativ zum ersten Stator 162 bewegbar angeordneten ersten Läufer 161 aufweist. Der erste Stator 162 ist flüssigkeitsdicht von einer Ummantelung aus Edelstahl umschlossen, und der erste Läufer 161 weist ein flüssigkeitsdichtes Läuferrohr aus Edelstahl auf, in dem Permanentmagnete (nicht gezeigt) angeordnet sind. Ausserdem umfasst die Vorrichtung 101 einen zweiten, z.B. tubularen, Linearmotor 109, der baugleich zum ersten Linearmotor 106 ist und einen zweiten Stator 192 sowie einen relativ zum zweiten Stator 192 bewegbaren zweiten Läufer 191 aufweist.

Der erste Läufer 161 des ersten Linearmotors 106 ist fest mit dem ersten Greiferwagen 105 verbunden und der zweite Läufer 191 des zweiten Linearmotors 109 ist fest mit dem zweiten Greiferwagen 104 verbunden. Sowohl der erste Stator 162 des ersten Linearmotors 106 als auch der zweite Stator 192 des zweiten Linearmotors 109 sind jeweils fest mittels des Montageblocks 103 mit den Führungsstangen 120, 121 verbunden. Sie sind jeweils in Längsrichtung der wenigstens zwei Führungsstangen 120, 121 und parallel zueinander angeordnet, wobei der erste Stator 162 und der zweite Stator 192 in Längsrichtung der beiden Führungsstangen 120, 121 überlappen (in Fig. 2 sogar vollständig). Durch Bewegen des ersten Läufers 161 relativ zum ersten Stator 162 lässt sich somit der erste Greiferwagen 105 entlang der beiden Führungsstangen 120, 121 bewegen. Entsprechend lässt sich der durch Bewegen des zweiten Läufers 191 relativ zum zweiten Stator 192 der zweite Greiferwagen 104 entlang der beiden Führungsstangen 120, 121 bewegen.

Sowohl der erste Stator 162 als auch der zweite Stator 192 ist grundsätzlich jeweils an verschieden Positionen entlang der Führungsstangen 120, 121 positionierbar. In der jeweiligen Position ist jedoch der erste Stator 162 und der zweite Stator 192 jeweils fest mittels des Montageblocks 103 mit den zwei Führungsstangen 120, 121 verbunden.

Sowohl der erste Greiferwagen 105 als auch der zweite Greiferwagen 104 umfassen jeweils eine Aussparung, die sich in Längsrichtung der wenigstens zwei Führungsstangen 120, 121 erstreckt, die an einer Seite des ersten Greiferwagens oder des zweiten Greiferwagens angeordnet ist, die dem ersten Stator 162 des ersten Linearmotors 106 zugewandt ist. Entsprechend umfassen der erste Greiferwagen 105 und der zweite Greiferwagen 104 eine weitere Aussparung 150, 140, die an der jeweiligen Seite des ersten Greiferwagens 105 oder des zweiten Greiferwagens 104 angeordnet ist, die dem zweiten Stator 192 des zweiten Linearmotors 109 zugewandt ist.

Am ersten Greiferwagen 105 ist ein erster Greiferarm 108 befestigt (fest angeordnet) und am zweiten Greiferwagen 104 ist ein zweiter Greiferarm 107 befestigt (fest angeordnet). Der erste Greiferarm 108 ist als zwei Stangen 180, 181 ausgebildet, die mittels zweier Befestigungszapfen 182 am ersten Greiferwagen 105 befestigt sind und an denen eine erste Greiferbacke 184 befestigt ist. Entsprechend ist auch der zweite Greiferarm 107 als zwei Stangen 170, 171 ausgebildet, die mittels zweier Befestigungszapfen 172 am zweiten Greiferwagen 104 befestigt sind und an denen eine zweite Greiferbacke 174 befestigt ist.

In der in Fig. 2 gezeigten Anordnung befinden sich sowohl der erste Greiferwagen 105 als auch der zweite Greiferwagen 104 jeweils in einer Position maximaler Auslenkung.

**In** **Fig.** 3 ist das in Fig. 2 gezeigte Ausführungsbeispiel der erfindungsgemässen Vorrichtung gezeigt mit einer zweiten Anordnung des ersten Greiferwagens 105 und des zweiten Greiferwagens 104. In dieser Anordnung befindet sich der erste Läufer 161 relativ zum ersten Stator 162 des ersten Linearmotors 106 sowie der zweite Läufer 191 relativ zum zweiten Stator 192 des zweiten Linearmotoros 109 jeweils in einer teilweise in den jeweiligen Stator 162, 192 eingefahrenen Position. Der erste Greiferwagen 105 und der zweite Greiferwagen 104 sind im Vergleich zu der in Fig. 2 dargestellten Anordnung aufeinander zubewegt. Dementsprechend sind auch die an den jeweiligen Greiferwagen 104, 105 befestigten Greiferarme 107, 108 und somit die wiederum an den Greiferarmen 107, 108 befestigten Greiferbacken 174, 184 aufeinander zubewegt.

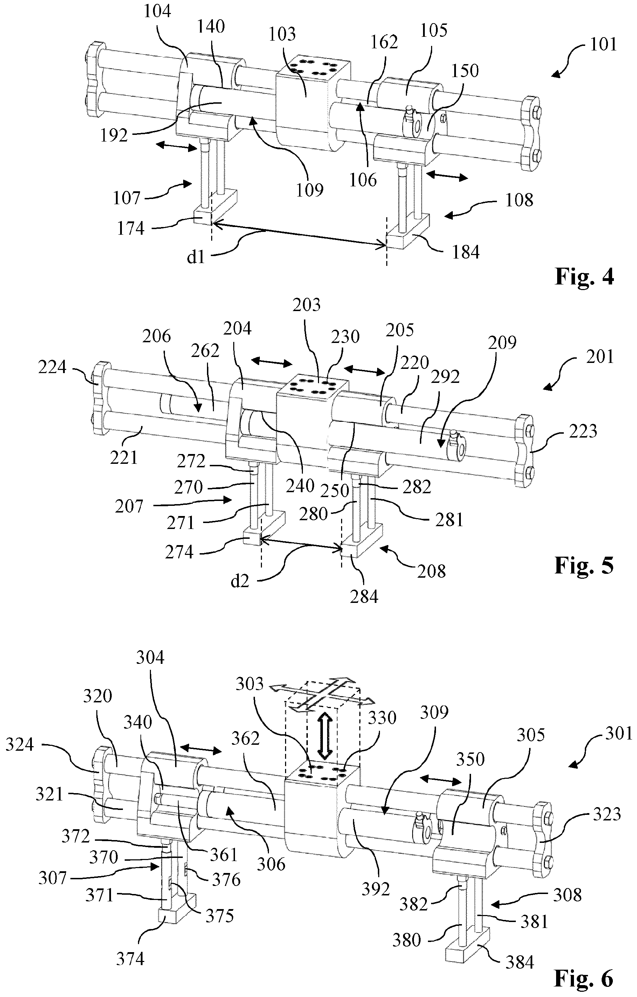

In **Fig. 4** ist das in den Figuren 2 und 3 gezeigte Ausführungsbeispiel der erfindungsgemässen Vorrichtung gezeigt mit einer dritten Anordnung des ersten Greiferwagens 105 und des zweiten Greiferwagens 104. Bei dieser dritten Anordnung befinden sich die beiden Läufer 161, 191 in einer vollständig in den jeweiligen Stator 162, 192 eingefahrenen Anordnung. In dieser Anordnung überlappen der erste Greiferwagen 105 und der zweite Greiferwagen 104 teilweise in Längsrichtung jeweils mit dem ersten Stator 162 sowie mit dem zweiten Stator 192. An einer dem zweiten Stator 192 zugewandten Seite umgibt die weitere Aussparung 150 des zweiten Greiferwagens 105 den zweiten Stator 192 teilweise, wodurch eine Berührung des zweiten Greiferwagens 105 mit dem zweiten Stator 192 vemieden wird. Die auf der dem ersten Stator 162 zugewandten Seite des ersten Greiferwagens 105 angeordnete Aussparung umgibt den ersten Stator 162 zumindest teilweise, wodurch auch auf der dem ersten Stator 162 zugewandten Seite des ersten Greiferwagens 105 eine Berührung des ersten Greiferwagens 105 mit dem ersten Stator 162 vermieden wird. An einer dem zweiten Stator 192 zugewandten Seite umgibt die weitere Aussparung 140 des zweiten Greiferwagens 104 den zweiten Stator 192 teilweise, wodurch auch eine Berührung des zweiten Greiferwagens 104 mit dem zweiten Stator 192 vermieden wird. Die auf der dem ersten Stator 162 zugewandten Seite des zweiten Greiferwagens 104 angeordnete Aussparung umgibt den ersten Stator 162 zumindest teilweise, wodurch auch auf der dem ersten Stator 162 zugewandten Seite des zweiten Greiferwagens 104 eine Berührung desselben mit dem ersten Stator 162 vermieden wird.

In der in Fig. 4 gezeigten Anordnung haben die Greiferwagen 104, 105 und somit auch die Greiferarme 107, 108 den geringsten Abstand voneinander. Die beiden Greiferbacken 174 haben in dieser Anordnung einen minimalen Abstand d1 voneinander.

In **Fig. 5** ist ein drittes Ausführungsbeispiel der erfindungsgemässen Vorrichtung 201 zum Greifen von Lebensmitteln gezeigt. Die Vorrichtung 201 umfasst zwei fest miteinander verbundene, parallel und übereinander angeordnete gerade Führungsstangen 220, 221, die baugleich zu den in den beiden vorhergehenden Ausführungsbeispielen beschriebenen Führungsstangen sind und die über einen Montageblock 203 fest miteinander verbunden sind, wobei die erste Führungsstange 220 in einer ersten Öffnung fest in dem Montageblock 203 angeordnet ist und die zweite Führungsstange 221 in einer zweiten Öffnung fest in dem Montageblock 203 angeordnet ist. Zusätzlich sind die beiden Führungsstangen 220, 221 an deren Längsenden jeweils mit einer Klammer 223, 224 miteinander verbunden.

Auf den Führungsstangen 220, 221 sind ein erster Greiferwagen 205 und ein zweiter Greiferwagen 204 aus POM angeordnet. Sowohl der erste Greiferwagen 205 als auch der zweite Greiferwagen 204 ist entlang der Führungsstangen 220, 221 bewegbar (siehe Doppelpfeile). Die Greiferwagen 204, 205 sind mittels Gleitlagern auf den beiden Führungsstangen 220, 21 angeordnet, wie dies auch in den ersten beiden Ausführungsbeispielen der Fall ist und oben bereits beschrieben ist.

Weiterhin umfasst die Vorrichtung 201 einen ersten, z.B. tubularen, Linearmotor 206, der einen ersten Stator 262 und einen relativ zum ersten Stator 262 bewegbar angeordneten ersten Läufer 261 aufweist. Ausserdem umfasst die Vorrichtung 201 einen zweiten, z.B. tubularen, Linearmotor 209, der einen zweiten Stator 292 sowie einen relativ zum ersten Stator 292 bewegbaren zweiten Läufer 291 aufweist. Die beiden Linearmotoren 206, 209 sind baugleich zu den in den ersten beiden Ausführungsbeispielen beschriebenen Linearmotoren 6, 106, 109.

Der erste Läufer des ersten Linearmotors 206 ist fest mit dem ersten Greiferwagen 205 verbunden, und der zweite Läufer 291 des zweiten Linearmotors 209 ist fest mit dem zweiten Greiferwagen 204 verbunden. Sowohl der erste Stator 262 des ersten Linearmotors 206 als auch der zweite Stator 292 des zweiten Linearmotors 209 sind jeweils fest mit dem Montageblock 203 und mittels des Montageblocks 203 fest mit den Führungsstangen 220, 221 verbunden. Sie sind jeweils in Längsrichtung der wenigstens zwei Führungsstangen 220, 221 und parallel zueinander angeordnet, wobei der erste Stator 262 und der zweite Stator 292 in Längsrichtung der beiden Führungsstangen 220, 221 überlappen (hier nur teilweise). Durch Bewegen des ersten Läufers 261 relativ zum ersten Stator 262 lässt sich der erste Greiferwagen 205 entlang der beiden Führungsstangen 220, 221 bewegen. Entsprechend lässt sich durch Bewegen des zweiten Läufers 291 relativ zum zweiten Stator 292 der zweite Greiferwagen 204 entlang der beiden Führungsstangen 220, 221 bewegen.

Sowohl der erste Stator 262 als auch der zweite Stator 292 ist grundsätzlich an verschiedenen Positionen in Längsrichtung der Führungsstangen 220, 221 positionierbar. In der jeweiligen Position ist jedoch sowohl der erste Stator 262 als auch der zweite Stator 292 jeweils fest mittels des Montageblocks 203 mit den zwei Führungsstangen 220, 221 verbunden.

Sowohl der erste Greiferwagen 205 als auch der zweite Greiferwagen 204 umfassen jeweils eine Aussparung, die sich in Längsrichtung der wenigstens zwei Führungsstangen 220, 221 erstreckt und die an einer Seite des ersten Greiferwagens 205 bzw. des zweiten Greiferwagens 204 angeordnet ist, die dem ersten Stator 262 des ersten Linearmotors 206 zugewandt ist. Entsprechend umfasst der erste Greiferwagen 205 und der zweite Greiferwagen 204 jeweils eine weitere Aussparung 250 bzw. 240, die an einer Seite des ersten Greiferwagens 205 bzw. des zweiten Greiferwagens 204 angeordnet ist, die dem zweiten Stator 292 des zweiten Linearmotors 209 zugewandt ist.

Am ersten Greiferwagen 205 ist ein erster Greiferarm 208 befestigt (fest angeordnet) und am zweiten Greiferwagen 204 ist ein zweiter Greiferarm 207 befestigt (fest angeordnet).

Der erste Greiferarm 208 ist als zwei Stangen 280, 281 ausgebildet, die mittels zweier Befestigungszapfen 282 am ersten Greiferwagen 205 befestigt sind und an denen eine erste Greiferbacke 284 befestigt ist. Entsprechend ist auch der zweite Greiferarm 207 als zwei Stangen 270, 271 ausgebildet, die mittels zweier Befestigungszapfen 272 am zweiten Greiferwagen 204 befestigt sind und an denen eine zweite Greiferbacke 274 befestigt ist.

Bei der in Fig. 5 gezeigten Anordnung befinden sich sowohl der erste Greiferwagen 205 als auch der zweite Greiferwagen 204 jeweils in einer minimal ausgelenkten Position. Im Unterschied zu dem in der Fig. 4 gezeigten zweiten Ausführungsbeispiel der erfindungsgemässen Vorrichtung sind der erste Stator 262 des ersten Linearmotors 206 und der zweite Stator 292 des zweiten Linearmotors 209 in Längsrichtung der beiden Führungsstangen 220, 221 versetzt zueinander angeordnet, sodass sie in Längsrichtung nur teilweise überlappen. Dadurch haben die Greiferbacken 274, 284 einen minimalen Abstand d2 voneinander, der geringer ist als der minimale Abstand d1 der entsprechenden Greiferbacken 174, 184 in dem zweiten Ausführungsbeispiel der erfindungsgemässen Vorrichtung.

In **Fig. 6** ist ein viertes Ausführungsbeispiel der erfindungsgemässen Vorrichtung 301 zum Greifen von Lebensmitteln gezeigt, die als Teil eines Systems zum Greifen und Transportieren von Lebensmitteln an einer Transportvorrichtung befestigt ist (durch gestrichelte Linien dargestellt). Das in Fig. 6 dargestellte vierte Ausführungsbeispiel der erfindungsgemässen Vorrichtung 301 entspricht im Wesentlichen dem in den Figuren 2 bis 4 dargestellten zweiten Ausführungsbeispiel der erfindungsgemässen Vorrichtung 101, von einem weiter unten beschriebenen Kraftsensor abgesehen. Entsprechende Bezugsziffern erhöhen sich daher jeweils um zweihundert gegenüber dem in den Figuren 2 bis 4 beschriebenen zweiten Ausführungsbeispiel (auch wenn sie nachfolgend im Einzelnen nicht beschrieben sind).

Die beiden Stangen 370, 371 des zweiten Greiferarms 307 weisen jeweils einen Kraftsensor 375, 376 zur Messung einer in Längsrichtung der Führungsstangen 320, 321 auf den zweiten Greiferarm 307 wirkenden Kraft. Die hier gezeigte Anordnung entspricht einer Biegebalkenanordnung.

Die Vorrichtung 301 ist mittels des Montageblocks 303 an der durch die gestrichelten Linien angedeutete Transportvorrichtung befestigt. Der Montageblock 303 umfasst mehrere Montagelöcher 330, mittels der der Montageblock 303 an der Transportvorrichtung befestigt ist. Mit dem Transportsystem lässt sich die Vorrichtung 301 sowohl seitlich (durch die gekreuzten Doppelpfeile angedeutet) als auch in der Höhe (ebenfalls durch einen entsprechenden Doppelpfeil angedeutet) verfahren.

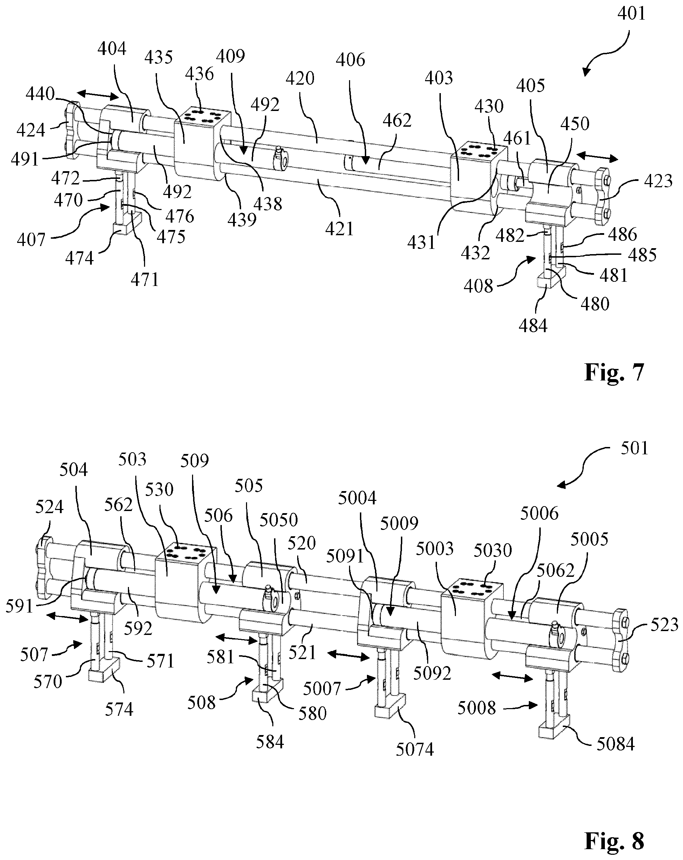

In **Fig. 7** ist ein fünftes Ausführungsbeispiel der erfindungsgemässen Vorrichtung 401 zum Greifen von Lebensmitteln dargestellt. Die Vorrichtung 401 umfasst zwei fest miteinander verbundene, und parallel und übereinander angeordnete gerade Führungsstangen 420, 421 aus Edelstahl. Beide Führungsstangen 420, 421 sind hohl und weisen einen kreisrundes Querschnittsprofil auf. Die beiden Führungsstangen 420, 421 sind über einen ersten Montageblock 403 sowie einen zweiten Montageblock 435 fest miteinander verbunden, wobei die erste Führungsstange 420 in einer ersten Öffnung 431 fest in dem ersten Montageblock 403 angeordnet ist und die zweite Führungsstange 421 in einer zweiten Öffnung 432 fest in dem ersten Montageblock 403 angeordnet ist. Weiterhin ist die erste Führungsstange 420 in einer ersten Öffnung 438 fest in dem zweiten Montageblock 435 angeordnet und die zweite Führungsstange 421 ist in einer zweiten Öffnung 439 fest in dem zweiten Montageblock 435 angeordnet. Zusätzlich sind die beiden Führungsstangen 420, 421 an deren Längsenden jeweils mit einer Klammer 423, 424 miteinander verbunden. Sowohl der erste Montageblock 403 als auch der zweite Montageblock 435 sind jeweils mit Montagelöchern 430, 436 zur Montage der Vorrichtung an eine Transportvorrichtung versehen.

Auf den Führungsstangen 420, 421 sind ein erster Greiferwagen 405 und ein zweiter Greiferwagen 404 aus POM angeordnet. Sowohl der erste Greiferwagen 405 als auch der zweite Greiferwagen 404 ist entlang der Führungsstangen 420, 421 bewegbar (siehe Doppelpfeile). Die Greiferwagen 404, 405 sind mittels Gleitlager auf den beiden Führungsstangen 420, 421 angeordnet, wie bei den vorstehend beschriebenen Ausführungsbeispielen.

Weiterhin umfasst die Vorrichtung 401 einen ersten, z.B. tubularen, Linearmotor 406, der einen ersten Stator 462 und einen relativ zum ersten Stator 462 bewegbar angeordneten ersten Läufer 461 aufweist. Ausserdem weist die Vorrichtung 401 einen zweiten, z.B: tubularen, Linearmotor 409 auf, der baugleich zum ersten Linearmotor 406 ist und einen zweiten Stator 492 sowie einen relativ zum ersten Stator 492 bewegbaren zweiten Läufer 491 aufweist. Die beiden Linearmotoren 406, 409 sind baugleich zu den in den ersten vier Ausführungsbeispielen beschriebenen Linearmotoren.

Der erste Läufer 461 des ersten Linearmotors 406 ist fest mit dem ersten Greiferwagen 405 verbunden und der zweite Läufer 491 des zweiten Linearmotors 409 ist fest mit dem zweiten Greiferwagen 404 verbunden. Der erste Stator 462 des ersten Linearmotors 406 ist mit dem ersten Montageblock 403 fest verbunden und mittels des ersten Montageblocks 403 fest mit den Führungsstangen 420, 421 verbunden und in Längsrichtung der wenigstens zwei Führungsstangen 420, 421 angeordnet. Der zweite Stator 492 des zweiten Linearmotors 409 ist fest mit dem zweiten Montageblock 435 und mittels des zweiten Montageblocks 435 fest mit den Führungsstangen 420, 421 verbunden und ebenfalls in Längsrichtung der wenigstens zwei Führungsstangen 420, 421 und parallel zum ersten Stator 462 des ersten Linearmotors 406 angeordnet. Der erste Stator 462 und der zweite Stator 492 sind in Längsrichtung der beiden Führungsstangen 420, 421 nicht überlappend angeordnet, sondern sind in Längsrichtung der beiden Führungsstangen 402, 420 voneinander beabstandet angeordnet. Durch Bewegen des ersten Läufers 461 relativ zum ersten Stator 462 lässt sich der erste Greiferwagen 405 entlang der beiden Führungsstangen 420, 421 bewegen. Entsprechend lässt sich durch Bewegen des zweiten Läufers 491 relativ zum zweiten Stator 492 der zweite Greiferwagen 404 entlang der beiden Führungsstangen 420, 421 bewegen.

Sowohl der erste Stator 462 als auch der zweite Stator 492 ist grundsätzlich an verschieden Positionen in Längsrichtung der Führungsstangen 420, 421 positionierbar. In der jeweiligen Position ist der erste Stator 462 jedoch fest mittels des ersten Montageblocks 403 mit den zwei Führungsstangen 420, 421 verbunden und der zweite Stator 492 ist in der jeweiligen Position ebenfalls fest mittels des zweiten Montageblocks 435 mit den zwei Führungsstangen 420, 421 verbunden.

Sowohl der erste Greiferwagen 405 als auch der zweite Greiferwagen 404 umfassen jeweils eine Aussparung die sich in Längsrichtung der wenigstens zwei Führungsstangen 420, 421 erstreckt, die an einer jeweiligen Seite des ersten Greiferwagens oder des zweiten Greiferwagens angeordnet ist, die dem ersten Stator 462 des ersten Linearmotors 406 zugewandt ist. Entsprechend umfassen der erste Greiferwagen 405 und der zweite Greiferwagen 404 jeweils eine weitere Aussparung 450 bzw. 440, die an der jeweiligen Seite des ersten Greiferwagens 405 bzw. des zweiten Greiferwagens 404 angeordnet ist und die dem zweiten Stator 492 des zweiten Linearmotors 409 zugewandt ist.

Am ersten Greiferwagen 405 ist ein erster Greiferarm 408 befestigt und am zweiten Greiferwagen 404 ist ein zweiter Greiferarm 407 befestigt. Der erste Greiferarm 408 ist als zwei Stangen 480, 481 ausgebildet, die mittels zweier Befestigungszapfen 482 am ersten Greiferwagen 405 befestigt sind und an denen eine erste Greiferbacke 484 befestigt ist. Entsprechend ist auch der zweite Greiferarm 407 als zwei Stangen 470, 471 ausgebildet, die mittels zweier Befestigungszapfen 472 am zweiten Greiferwagen 404 befestigt sind und an denen eine zweite Greiferbacke 474 befestigt ist.

Die beiden Stangen 470, 471 des zweiten Greiferarms 407 weisen jeweils einen Kraftsensor 475, 476 zur Messung zur Messung einer in Längsrichtung der Führungsstangen 420, 421 auf den zweiten Greiferarm 407 wirkenden Kraft. Auch die beiden Stangen 480, 481 des ersten Greiferarms 408 weisen jeweils einen Kraftsensor 485, 486 zur Messung zur Messung einer in Längsrichtung der Führungsstangen 420, 421 auf den ersten Greiferarm 408 wirkenden Kraft. Die hier gezeigten Anordnungen der Kraftsensoren 475, 476, 485, 486 entsprechen jeweils einer Biegebalkenanordnung.

In dem in Fig. 7 gezeigten Ausführungsbeispiel ist der Abstand der beiden Greiferbacken 474, 484 deutlich grösser als in den beiden vorangegangenen Ausführungsbeispielen. Dies ermöglich ein Greifen von Produkten mit deutlich grösseren Abmessungen als in den zuvor beschriebenen Ausführungsbeispielen.

**Fig. 8** zeigt ein sechstes Ausführungsbeispiel der erfindungsgemässen Vorrichtung 501 zum Greifen von Lebensmitteln. Die Vorrichtung 501 umfasst zwei fest miteinander verbundene, parallel und übereinander angeordnete gerade Führungsstangen 520, 521 aus Edelstahl. Beide Führungsstangen 520, 521 sind hohl und weisen einen kreisrundes Querschnittsprofil auf. Die beiden Führungsstangen 520, 521 sind über einen ersten Montageblock 503 sowie einen zweiten Montageblock 5003 fest miteinander verbunden, wobei die beiden Führungsstangen 520, 521 in der für die vorstehend erläuterten Ausführungsbeispiele bereits beschriebenen Art und Weise fest in dem ersten Montageblock 503 und dem zweiten Montageblock 5003 angeordnet sind. Zusätzlich sind die beiden Führungsstangen 520, 521 an deren Längsenden jeweils mit einer Klammer 523, 524 miteinander verbunden.

Auf den Führungsstangen 520, 521 sind ein erster Greiferwagen 505 und ein zweiter Greiferwagen 504 angeordnet, die jeweils baugleich zu den in dem vorangegangenen Ausführungsbeispielen beschriebenen Greiferwagen 405, 404 sind. Sowohl der erste Greiferwagen 505 als auch der zweite Greiferwagen 504 ist entlang der Führungsstangen 420, 421 bewegbar (siehe Doppelpfeile). Die Greiferwagen 504, 505 sind mittels Gleitlager auf den beiden Führungsstangen 520, 521 angeordnet, wie bei den vorstehend beschriebenen Ausführungsbeispielen, bei denen beide Greiferwagen bewegbar sind.

Weiterhin umfasst die Vorrichtung 501 einen ersten, z.B. tubularen, Linearmotor 506, der einen ersten Stator 562 aufweist und einen relativ zum ersten Stator 562 bewegbar angeordneten ersten Läufer 561 (nicht sichtbar). Ausserdem umfasst die Vorrichtung 501 einen zweiten, z.B. tubularen, Linearmotor 509, der baugleich zum ersten Linearmotor 506 ist und einen zweiten Stator 592 aufweist sowie einen relativ zum ersten Stator 592 bewegbaren zweiten Läufer 591. Die beiden Linearmotoren 506, 509 sind baugleich zu den Linearmotoren in den vorstehend erläuterten Ausführungsbeispielen, bei denen beide Greiferwagen bewegbar sind.

Der Läufer 561 des ersten Linearmotors 506 ist fest mit dem ersten Greiferwagen 505 verbunden und der zweite Läufer 591 des zweiten Linearmotors 509 ist fest mit dem zweiten Greiferwagen 504 verbunden. Sowohl der erste Stator 562 als auch der zweite Stator 592 sind fest mit dem ersten Montageblock 503 und mittels des ersten Montageblocks 503 fest mit den Führungsstangen 520, 521 verbunden und jeweils in Längsrichtung der wenigstens zwei Führungsstangen 520, 521 sowie parallel zueinander angeordnet. Der erste Stator 562 und der zweite Stator 592 überlappen in Längsrichtung der beiden Führungsstangen 520, 521. Durch Bewegen des ersten Läufers 561 relativ zum ersten Stator 562 lässt sich der erste Greiferwagen 505 entlang der beiden Führungsstangen 520, 521 bewegen. Entsprechend lässt sich durch Bewegen des zweiten Läufers 591 relativ zum zweiten Stator 592 der zweite Greiferwagen 504 entlang der beiden Führungsstangen 520, 521 bewegen.

Am ersten Greiferwagen 505 ist ein erster Greiferarm 508 befestigt und am zweiten Greiferwagen 504 ist ein zweiter Greiferarm 507 befestigt. Die Greiferarme 507, 508 sind jeweils baugleich zu den in dem vorangegangenen Ausführungsbeispiel beschriebenen Greiferarmen 407, 408. Am ersten Greiferarm 508, der als zwei Stangen 580, 581 ausgebildet ist, ist eine erste Greiferbacke 584 befestigt, und am zweiten Greiferarm 507, der ebenfalls als zwei Stangen 570, 571 ausgebildet ist, ist eine zweite Greiferbacke 574 befestigt.

Auf den Führungsstangen 520, 521 sind zudem ein dritter Greiferwagen 5005 und ein vierter Greiferwagen 5004 angeordnet, die jeweils baugleich zu dem ersten Greiferwagen 505 und dem zweiten Greiferwagen 504 sind. Sowohl der dritte Greiferwagen 5005 als auch der vierte Greiferwagen 5004 ist entlang der Führungsstangen 520, 521 bewegbar (siehe Doppelpfeile). Die Greiferwagen 5004, 5005 sind mittels Gleitlager auf den beiden Führungsstangen 520, 521 angeordnet, wie bei den vorstehend beschriebenen Ausführungsbeispielen, bei denen beide Greiferwagen bewegbar sind.

Weiterhin umfasst die Vorrichtung 501 einen dritten, z.B. tubularen, Linearmotor 5006, der einen dritten Stator 5062 und einen relativ zum dritten Stator 5062 bewegbar angeordneten dritten Läufer 5061 (nicht sichtbar) aufweist. Ausserdem umfasst die Vorrichtung 501 einen vierten, z.B. tubularen, Linearmotor 5009, der einen vierten Stator 5092 sowie einen relativ zum vierten Stator 5092 bewegbaren vierten Läufer 5091 aufweist. Der dritte Linearmotor 5006 und der vierte Linearmotor 5009 sind baugleich zu dem ersten Linearmotor 506 bzw. dem zweiten Linearmotor 509.

Der dritte Läufer 5061 des dritten Linearmotors 5006 ist fest mit dem dritten Greiferwagen 5005 verbunden und der vierte Läufer 5091 des vierten Linearmotors 5009 ist fest mit dem vierten Greiferwagen 5004 verbunden. Sowohl der dritte Stator 5062 als auch der vierte Stator 5092 sind jeweils fest mit dem zweiten Montageblock 5003 und mittels des zweiten Montageblocks 5003 fest mit den Führungsstangen 520, 521 fest verbunden und in Längsrichtung der wenigstens zwei Führungsstangen 520, 521 sowie parallel zueinander angeordnet, wobei der dritte Stator 5062 und der vierte Stator 5092 in Längsrichtung der beiden Führungsstangen 520, 521 überlappen. Durch Bewegen des dritten Läufers 5061 relativ zum dritten Stator 5062 lässt sich der dritte Greiferwagen 5005 entlang der beiden Führungsstangen 520, 521 bewegen. Entsprechend lässt sich der durch Bewegen des vierten Läufers 5091 relativ zum vierten Stator 5092 der vierte Greiferwagen 5004 entlang der beiden Führungsstangen 520, 521 bewegen.

Am dritten Greiferwagen 5005 ist ein dritter Greiferarm 5008 befestigt und am vierten Greiferwagen 5004 ist ein vierter Greiferarm 5007 befestigt. Die Greiferarme 5007, 5008 sind jeweils baugleich zu den in dem vorangegangenen Ausführungsbeispiel beschriebenen Greiferarmen 407, 408. Am dritten Greiferarm 5008 ist eine dritte Greiferbacke 5084 und am vierten Greiferarm 5007 ist eine vierte Greiferbacke 5074 befestigt.

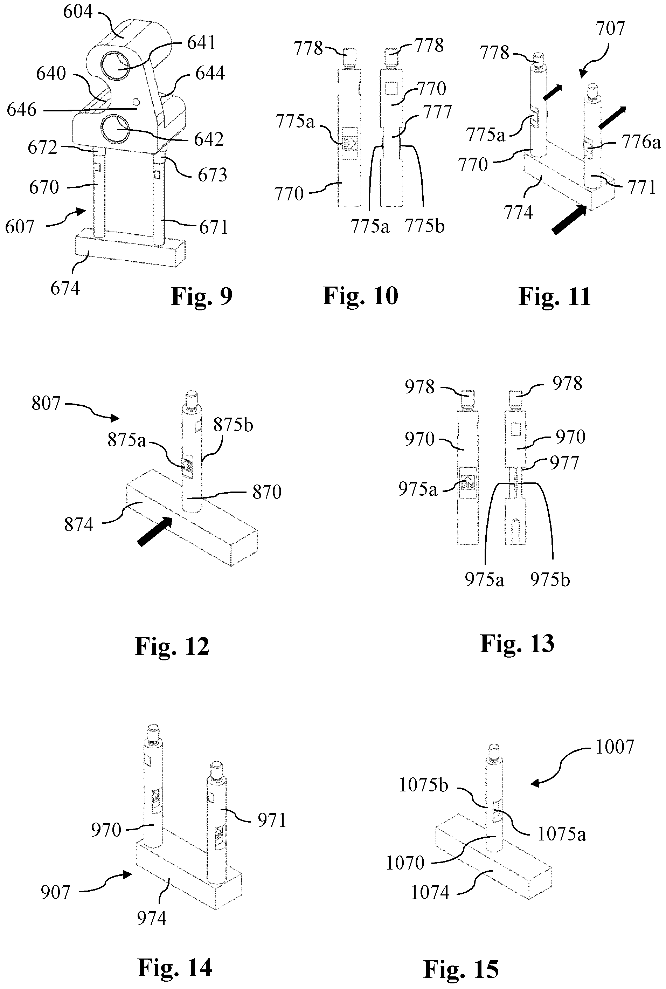

**Fig. 9** zeigt ein Ausführungsbeispiel eines Greiferwagens 604 mit einem daran befestigten Greiferarm 607, das weitestgehend (von den Kraftsensoren abgesehen) baugleich ist zu den zweiten Greiferwagen (oder entsprechend 'seitenverkehrt' auch zu den ersten Greiferwagen) der in den in den vorstehenden Figuren gezeigten Ausführungsbeispielen. Der Greiferwagen 604 weist eine erste Öffnung 641 und eine zweite Öffnung 642 mit jeweils einem kreisrunden Querschnittsprofil auf, die sich jeweils in Längsrichtung der Führungsstangen durch den Greiferwagen 604 hindurch erstreckt. Der Greiferwagen 604 umfasst einen Greiferarm 607, der als zwei Stangen 670, 671 ausgebildet ist, die über Befestigungszapfen 672, 673 an dem Greiferwagen 604 (fest) befestigt sind. An den beiden Stangen 670, 671 ist eine Greiferbacke 674 befestigt. In dem hier gezeigten Ausführungsbeispiel ist die Greiferbacke 674 als einfacher Block ausgebildet. In anderen Ausführungsbeispielen kann die Greiferbacke 674 jedoch auch anders ausgebildet sein. An den beiden Stangen 670, 671 ist jeweils ein Kraftsensor 675 bzw. 676 angeordnet, der hier nicht dargestellt ist. Der Greiferwagen 604 weist eine Aussparung 640 auf, die sich in Längsrichtung der wenigstens zwei Führungsstangen erstreckt, wie dies vorstehend bereits beschrieben ist. Die Aussparung 640 ist auf derjenigen Seite des Greiferwagens 604 angeordnet, die dann, wenn der Greiferwagen 604 auf den Führungsstangen angeordnet ist, dem zweiten Stator zugewandt ist. Eine entsprechende weitere Aussparung ist auf der gegenüberliegenden Seite angeordnet, die dann, wenn der Greiferwagen 604 auf den Führungsstangen angeordnet ist, dem ersten Stator zugewandt ist. Die Aussparung 640 erstreckt sich über die gesamte Länge des Greiferwagens 604, während die Aussparung 644 durch eine Befestigungsplatte 646 begrenzt ist, an der der Läufer des ersten Linearmotors befestigt ist.

**Fig. 10** zeigt ein Ausführungsbeispiel einer Stange 770 eines Greiferarms in einer Vorderansicht und einer Seitenansicht. Die Stange 770 umfasst einen Montagezapfen 778, um die Stange 770 mittels des zugehörigen Befestigungszapfen mit dem Greiferwagen fest zu verbinden. Die als Biegebalken ausgeführte Stange 770 weist einen Bereich 777 verringerter Dicke auf, in dem ein erster Dehnungsmessstreifen 775a und auf einer gegenüberliegenden Seite ein zweiter Dehnungsmessstreifen 775b angeordnet sind, die zusammen den Kraftsensor bilden. Der Bereich verringerter Dicke dient als Sollbiegestelle. Aufgrund der unterschiedlichen Dehnung der beiden Dehnungsmessstreifen beim Einwirken einer Kraft lässt sich die Verbiegung der als Biegebalken ausgeführten Stange 770 mit Hilfe der beiden Dehnungsmesstreifen 775a, 775b bestimmen.

**Fig. 11** zeigt ein Ausführungsbeispiel eines Greiferarms 707 mit zwei Stangen 770, 771, wobei jede Stange 770, 771 von ihrer Ausführung her jeweils der in Fig. 10 gezeigten Stange 770 entspricht. Die beiden Stangen 770, 771 sind mit der Greiferbacke 774 fest verbunden. Mit der hier gezeigten Anordnung lässt sich über die bekannten Abmessungen der als Biegebalken ausgeführten Stangen 770, 771 die in Längsrichtung der Führungsstangen auf die Greiferbacke 774 wirkende Kraft bestimmen. Durch die Ausbildung des Greiferarms 707 als zwei Stangen 770, 771 lässt sich zum einen vermeiden, dass bei einem Greifen eines Produkts derart, dass die Kraft nicht zentral auf die Greiferbacke 774 wirkt, die Kraftmessung mit Hilfe der Dehnungsmessstreifen 775a, 775b, 776a, 776b verfälscht wird. Weiterhin lässt sich durch Addition der durch die Dehnungsmessstreifen 775a, 776a und die jeweils gegenüberliegend angeordneten zugehörigen Dehnungsmesstreifen 775b, 776b gemessene Kraft (dargestellt durch kurze schwarze Pfeile in der Zeichnung), die auf die jeweilige Stange 770 bzw. 771 wirkt, die insgesamt auf die Greiferbacke 774 wirkende Gesamtkraft (dargestellt durch langen Pfeil in der Zeichnung) bestimmen.

Die von den Dehnungsmessstreifen gemessenen Signale können dann an eine Steuereinheit weitergegeben werden, die diese Signale auswertet und die Linearmotoren in geeigneter Weise ansteuern kann.

**Fig. 12** zeigt ein Ausführungsbeispiel eines Greiferarms 807 mit nur einer Stange 870, die von ihrer Ausführung her der in Fig. 10 gezeigten Stange 770 entspricht, und die einen durch zwei Dehnungsmessstreifen 875a, 875b gebildeten Kraftsensor umfasst und die mit der Greiferbacke 874 fest verbunden ist. Das hier gezeigte Ausführungsbeispiel ist vor allem für Greifvorgänge geeignet, in denen die Kraft zentral auf die Greiferbacke 874 einwirkt (dargestellt durch den langen Pfeil).

**Fig. 13** zeigt ein Ausführungsbeispiel einer Stange 970 eines Greiferarms in einer Vorderansicht und einer Seitenansicht. Die hier als Scherbalken ausgeführte Stange 970 weist eine Aussparung 977 auf, in dem eine erster Dehnungsmessstreifen 975a und auf einer gegenüberliegenden Seite der Aussparung 977 ein zweiter Dehnungsmessstreifen 975b, die zusammen den Kraftsensor bilden. Die Aussparung 977 dient als Messstelle. Aufgrund der durch die beiden Dehnungsmessstreifen 975a, 975b gemessenen Scherspannung lässt sich die auf die Stange 970 wirkende Kraft bestimmen.

**Fig. 14** zeigt ein Ausführungsbeispiel eines Greiferarms mit zwei Stangen 970, 971, wobei jede der Stangen 970, 971 von ihrer Ausführung her jeweils der in Fig. 13 gezeigten Stange 970 entspricht. Die beiden Stangen 970, 971 sind mit der Greiferbacke 974 fest verbunden.

**Fig. 15** zeigt ein Ausführungsbeispiel eines Greiferarms 1007 mit nur einer Stange 1070, die von ihrer Ausführung her der in Fig. 13 gezeigten Stange 970 entspricht und die einen durch zwei Dehnungsmessstreifen 1075a, 1075b ausgebildeten Kraftsensor umfasst und mit einer Greiferbacke 1074 fest verbunden ist.

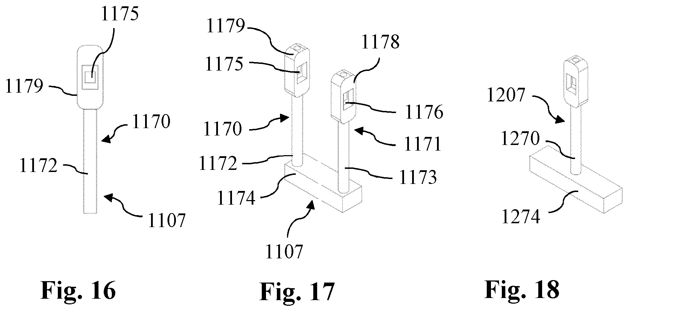

**Fig. 16** zeigt ein Ausführungsbeispiel einer Stange 1170 eines zweiteilig ausgebildeten Greiferarms 1107. Die Stange 1170 umfasst einen als Anschlussteil 1179 mit einem integrierten Kraftsensor 1175 ausgebildeten ersten Teil. Weiterhin umfasst die Stange 1170 einen zweiten Teil, der als austauschbare Verlängerung 1172 ausgebildet ist. Die austauschbare Verlängerung 1172 ist lösbar mit dem Anschlussteil 1179 verbunden.

**Fig. 17** zeigt eine ein Ausführungsbeispiel eines Greiferarms 1107 mit zwei Stangen 1170, 1171, wobei jeder der Stangen 1170, 1171 von ihrer Ausführung her der in Fig. 16 gezeigten Stange 1170 entspricht. Die beiden lösbaren Verlängerungen 1172, 1173 der Stangen 1170, 1171 sind jeweils mit der Greiferbacke 1174 fest, aber lösbar verbunden. Der Greiferarm 1107 mit den beiden Stangen 1170, 1171 und die daran befestigten Greiferbacke 1174 lässt sich über die beiden Anschlussteile 1178, 1179, die die jeweiligen Kraftsensoren 1175, 1176 umfassen, fest mit dem entsprechenden Greiferwagen verbinden.

**Fig. 18** zeigt ein Ausführungbeispiel eines Greiferarms 1207 mit nur einer Stange 1270, die von ihrer Ausführung her der in Fig. 12 gezeigten Stange 870 entspricht und mit der Greiferbacke 1274 fest verbunden ist.

Die erfindungsgemässe Vorrichtung zum Greifen sowie das erfindungsgemässe System zum Greifen und Transportieren von Lebensmitteln sind vorstehend anhand von Ausführungsbeispielen erläutert worden. Die Erfindung ist jedoch nicht auf diese Ausführungsbeispielen beschränkt, sondern soll auch solche Ausführungsbeispiele umfassen, die von der technischen Lehre der Erfindung Gebrauch machen. Der Schutzbereich wird daher durch die nachfolgenden Patentansprüche bestimmt.

## Patentansprüche

1. Vorrichtung (1; 101; 201; 301; 401; 501) zum Greifen von Lebensmitteln oder pharmazeutischen Produkten, umfassend:
- wenigstens zwei ortsfeste, fest miteinander verbundene, und parallel angeordnete gerade Führungsstangen (20, 21; 120, 121; 220, 221; 320, 321; 420, 421; 520, 521) aus Edelstahl,
- einen ersten Greiferwagen (5; 105; 205; 305; 405; 505) mit einem daran befestigten ersten Greiferarm (8; 108; 208; 308; 408; 508),
- einen zweiten Greiferwagen (4; 104; 204; 304; 404; 504) mit einem daran befestigten zweiten Greiferarm (7; 107; 207; 307; 407; 507),
wobei der erste und der zweite Greiferwagen jeweils aus einem nicht-korrosiven Material, insbesondere nicht-korrosiven Kunststoff, besteht, und der erste und der zweite Greiferarm jeweils ebenfalls aus einem nicht-korrosiven Material, insbesondere Edelstahl, besteht, wobei der erste und der zweite Greiferwagen jeweils auf den wenigstens zwei Führungsstangen angeordnet ist, und wobei zumindest der erste Greiferwagen entlang der wenigstens zwei Führungsstangen bewegbar ist, sowie
- einen ersten, insbesondere tubularen, Linearmotor (6; 106; 206; 306; 406; 506), umfassend
- einen ersten Stator (62; 162; 262; 362; 462; 562), der flüssigkeitsdicht von einer Ummantelung aus einem nicht-korrosiven Material, insbesondere Edelstahl, umschlossen ist, und
- einen relativ zum ersten Stator bewegbar angeordneten ersten Läufer (61; 161; 261; 361; 461; 561), der ein flüssigkeitsdichtes Läuferrohr aus einem nicht-korrosiven Material, insbesondere Edelstahl, aufweist, in welchem Permanentmagnete angeordnet sind,
wobei der erste Läufer mit dem ersten Greiferwagen fest verbunden ist und der erste Stator mit zumindest einer der wenigstens zwei Führungsstangen fest verbunden ist, zur Bewegung des ersten Greiferwagens entlang der wenigstens zwei Führungsstangen durch Bewegen des ersten Läufers relativ zum ersten Stator,
wobei auch der zweite Greiferwagen (104; 204; 304; 404; 504) entlang der wenigstens zwei Führungsstangen (120, 121; 220, 221; 320, 321; 420, 421; 520, 521) bewegbar ist,
und wobei die Vorrichtung weiterhin einen zweiten, insbesondere tubularen, Linearmotor (109; 209; 309; 409; 509) aufweist, der zweite Linearmotor umfassend
- einen zweiten Stator (192; 292; 392; 492; 592), der flüssigkeitsdicht von einer Ummantelung aus einem nicht-korrosiven Material, insbesondere Edelstahl, umschlossen ist, und
- einen relativ zum zweiten Stator bewegbar angeordneten zweiten Läufer (191; 291; 391; 491; 591), der ein flüssigkeitsdichtes Läuferrohr aus einem nicht-korrosiven Material, insbesondere Edelstahl, aufweist, in welchem Permanentmagnete angeordnet sind,
wobei der zweite Läufer mit dem zweiten Greiferwagen fest verbunden ist und der zweite Stator mit zumindest einer der wenigstens zwei Führungsstangen fest verbunden ist, zur Bewegung des zweiten Greiferwagens entlang der wenigstens zwei Führungsstangen durch Bewegen des zweiten Läufers relativ zum zweiten Stator,und wobei der erste Läufer (161; 261; 361; 461; 561) des ersten Linearmotors (106; 206; 306; 406; 506) aus einer in den ersten Stator (162; 262; 362; 462; 562) eingefahrenen Anordnung in eine aus dem ersten Stator herausgefahrene Anordnung und wieder zurück in die eingefahrene Anordnung bewegbar ist, und wobei der zweite Läufer (191; 291; 391; 491; 591) des zweiten Linearmotors (109; 209; 309; 409; 509) aus einer in den zweiten Stator (192; 292; 392; 492; 592) eingefahrenen Anordnung in eine aus dem zweiten Stator herausgefahrene Anordnung und wieder zurück in die eingefahrene Anordnung bewegbar ist, derart, dass beim Bewegen des ersten und des zweiten Läufers aus dem ersten Stator beziehungsweise aus dem zweiten Stator heraus der erste Greiferwagen (105; 205; 305; 405; 505) und der zweite Greiferwagen (104; 204; 304; 404; 504) voneinander weg bewegt werden.

2. Vorrichtung nach Anspruch 1, wobei die wenigstens zwei Führungsstangen (20, 21; 120, 121; 220, 221; 320, 321; 420, 421; 520, 521) hohl sind und ein kreisrundes Querschnittsprofil aufweisen, und wobei zumindest der erste Greiferwagen (5; 105; 205; 305; 405; 505) und gegebenfalls auch der zweite Greiferwagen (4; 104; 204; 304; 404; 504) mittels Gleitlagern auf den wenigstens zwei Führungsstangen angeordnet ist.

3. Vorrichtung nach einem der vorangehenden Ansprüche, wobei der erste Greiferarm (8; 108; 208; 308; 408; 508) und der zweite Greiferarm (7; 107; 207; 307; 407; 507) jeweils als eine oder mehrere Stangen (70, 71, 80, 81; 170, 171, 180, 181; 270, 271, 280, 281; 370, 371, 380, 381; 470, 471, 480, 481; 570, 571, 580, 581; 670, 671; 770, 771; 870; 970, 971; 1070; 1170, 1171; 1270) ausgebildet ist.

4. Vorrichtung nach einem der vorangehenden Ansprüche, wobei entweder der erste Greiferarm (408; 508) oder der zweite Greiferarm ( 407; 507), oder beide, einen Kraftsensor (485, 486, 475, 476; 585, 586, 575, 576) umfassen, zur Messung einer in Längsrichtung der wenigstens zwei Führungsstangen (420, 421; 520, 521) auf den jeweiligen Greiferarm wirkenden Kraft.

5. Vorrichtung nach einem der vorangehenden Ansprüche, wobei die Vorrichtung weiterhin mindestens einen Montageblock (3; 103; 203; 303; 403, 435; 503; 5003) umfasst zur Montage der Vorrichtung an einer Transportvorrichtung, wobei durch den mindestens einen Montageblock auch die wenigstens zwei Führungsstangen (20, 21; 120, 121; 220, 221; 320, 321; 420, 421; 520, 521) fest miteinander verbunden sind.

6. Vorrichtung nach Anspruch 1 und Anspruch 5, wobei der erste Stator (162; 262; 362) des ersten Linearmotors (106; 206; 306) und der zweite Stator (192; 292; 392) des zweiten Linearmotors (109; 209; 309) jeweils in Längsrichtung der wenigstens zwei Führungsstangen (120, 121; 220, 221; 320, 321) und parallel zueinander angeordnet und derart mit den wenigstens zwei Führungsstangen fest verbunden sind, dass der erste Stator und der zweite Stator in Längsrichtung der wenigstens zwei Führungsstangen zumindest teilweise überlappen, und wobei der mindestens eine Montageblock (103; 203; 303) nur einen einzigen Montageblock aufweist und sowohl der erste Stator als auch der zweite Stator mittels des einzigen Montageblocks fest mit den wenigstens zwei Führungsstangen verbunden ist.

7. Vorrichtung nach Anspruch 1 und Anspruch 5, wobei der erste Stator (462) des ersten Linearmotors (406) und der zweite Stator (492) des zweiten Linearmotors (409) jeweils in Längsrichtung der wenigstens zwei Führungsstangen (420, 421) und parallel zueinander angeordnet und derart mit den wenigstens zwei Führungsstangen fest verbunden sind, dass der erste Stator und der zweite Stator in Längsrichtung der wenigstens zwei Führungsstangen (420, 421) voneinander beabstandet sind, wobei der mindestens eine Montageblock einen ersten Montageblock (403) und einen zweiten, vom ersten Montageblock (430) verschiedenen, Montageblock (435) aufweist, und wobei der erste Stator (462) mittels des ersten Montageblocks (403) fest mit den wenigstens zwei Führungsstangen (420, 421) verbunden ist und der zweite Stator (492) mittels des zweiten Montageblocks (435) fest mit den wenigstens zwei Führungsstangen (420, 421) verbunden ist.

8. Vorrichtung nach einem der vorangehenden Ansprüche, wobei der erste Greiferwagen (5; 105; 205; 305; 405; 505) oder der zweite Greiferwagen (4; 104; 204; 304; 404; 504), oder beide, eine Aussparung umfassen, die sich in Längsrichtung der wenigstens zwei Führungsstangen erstreckt, und wobei die Aussparung an einer jeweiligen Seite des ersten Greiferwagens (5; 105; 205; 305; 405; 505) oder des zweiten Greiferwagens (4; 104; 204; 304; 404; 504) angeordnet ist, die dem ersten Stator (62; 162; 262; 362; 462; 562) des ersten Linearmotors (6; 106; 206; 306; 406; 506) zugewandt ist,
wobei die Aussparung im Fall einer Überlappung des ersten Greiferwagens oder des zweiten Greiferwagens mit dem ersten Stator in der Längsrichtung der wenigstens zwei Führungsstangen den ersten Stator teilweise umgibt, um eine Berührung des ersten Greifwagens oder des zweiten Greiferwagens mit dem ersten Stator zu vermeiden.

9. Vorrichtung nach einem der vorangehenden Ansprüche, wobei der erste Greiferwagen (105; 205; 305; 405; 505) oder der zweite Greiferwagen (104; 204; 304; 404; 504), oder beide, eine weitere Aussparung (140, 150; 240, 250; 340, 350; 440, 450; 540, 550) umfassen, die sich in Längsrichtung der wenigstens zwei Führungsstangen erstreckt, und wobei die weitere Aussparung (140, 150; 240, 250; 340, 350; 440, 450; 540, 550) an einer jeweiligen weiteren Seite des ersten Greiferwagens oder des zweiten Greiferwagens angeordnet ist, die dem zweiten Stator des zweiten Linearmotors zugewandt ist,
wobei die weitere Aussparung im Fall einer Überlappung des ersten oder des zweiten Greiferwagens mit dem zweiten Stator in Längsrichtung der wenigstens zwei Führungsstangen den zweiten Stator teilweise umgibt, um eine Berührung des ersten Greiferwagens oder des zweiten Greiferwagens mit dem zweiten Stator zu vermeiden.

10. Vorrichtung nach einem der vorangehenden Ansprüche, wobei der erste Stator (162; 262; 362; 462; 562), oder der zweite Stator (192; 292; 392; 492; 592), oder beide, jeweils an verschieden Positionen in Längsrichtung der wenigstens zwei Führungsstangen (120, 121; 220, 221; 320, 321; 420, 421; 520, 521) positionierbar sind und wobei der jeweilige Stator in jeweils einer der verschiedenen Positionen fest mit zumindest einer der wenigstens zwei Führungsstangen verbunden ist.

11. Vorrichtung nach Anspruch 4, wobei der erste Greiferarm oder der zweite Greiferarm (1107; 1207), oder beide, zweiteilig ausgebildet sind, wobei ein erster Teil (1178, 1179) des zweiteiligen Greiferarms den Kraftsensor (1175, 1176) umfasst, und wobei ein zweiter Teil des zweiteiligen Greiferarms eine Armverlängerung aufweist (1170, 1171), die lösbar mit dem ersten Teil verbunden ist.

12. Vorrichtung nach einem der vorangehenden Ansprüche, weiterhin umfassend
- einen dritten Greiferwagen (5005) mit einem daran befestigten dritten Greiferarm (5008),
- einen vierten Greiferwagen (5004) mit einem daran befestigten vierten Greiferarm (5007), wobei der dritte und der vierte Greiferwagen aus einem nicht-korrosiven Material, insbesondere nicht-korrosiven Kunststoff, besteht, und der dritte und der vierte Greiferarm jeweils ebenfalls aus einem nicht-korrosiven Material, insbesondere Edelstahl, besteht, wobei der dritte und der vierte Greiferwagen jeweils auf den wenigstens zwei Führungsstangen (520, 521) angeordnet ist, und wobei zumindest der dritte Greiferwagen entlang der wenigstens zwei Führungsstangen bewegbar ist, und wobei der erste (505) und der zweite Greiferwagen (504) sowie der dritte (5005) und der vierte Greiferwagen (5004) jeweils paarweise zueinandergehörend auf den wenigstens zwei Führungsstangen angeordnet sind, sowie
- einen dritten, insbesondere tubularen, Linearmotor (5006), umfassend
- einen dritten Stator (5062), der flüssigkeitsdicht von einer Ummantelung aus einem nicht-korrosiven Material, insbesondere Edelstahl, umschlossen ist, und
- einen relativ zum dritten Stator bewegbar angeordneten dritten Läufer, der ein flüssigkeitsdichtes Läuferrohr aus einem nicht-korrosiven Material, insbesondere Edelstahl, aufweist, in welchem Permanentmagnete angeordnet sind,
wobei der dritte Läufer mit dem dritten Greiferwagen fest verbunden ist und der dritte Stator mit zumindest einer der wenigstens zwei Führungsstangen fest verbunden ist, zur Bewegung des dritte Greiferwagens entlang der wenigstens zwei Führungsstangen durch Bewegen des dritten Läufers relativ zum dritten Stator.

13. Vorrichtung nach Anspruch 12, wobei auch der vierte Greiferwagen (5004) entlang der wenigstens zwei Führungsstangen (520, 521) bewegbar ist, und wobei die Vorrichtung weiterhin einen vierten, insbesondere tubularen, Linearmotor (5009) aufweist, der vierte Linearmotor umfassend
- einen vierten Stator (5092), der flüssigkeitsdicht von einer Ummantelung aus einem nicht-korrosiven Material, insbesondere Edelstahl, umschlossen ist, und
- einen relativ zum vierten Stator bewegbar angeordneten vierten Läufer, der ein flüssigkeitsdichtes Läuferrohr aus einem nicht-korrosiven Material, insbesondere Edelstahl, aufweist, in welchem Permanentmagnete angeordnet sind,
wobei der vierte Läufer mit dem vierten Greiferwagen fest verbunden ist und der vierte Stator mit zumindest einer der wenigstens zwei Führungsstangen fest verbunden ist, zur Bewegung des vierten Greiferwagens entlang der wenigstens zwei Führungsstangen durch Bewegen des vierten Läufers relativ zum vierten Stator.

## Claims

1. Device (1; 101; 201; 301; 401; 501) for gripping food products or pharmaceutical products, comprising:
- at least two static, straight guide rods (20, 21; 120, 121; 220, 221; 320, 321; 420, 421; 520, 521) made of stainless steel, which guide rods are fixedly connected to one another and arranged in parallel,
- a first gripper carriage (5; 105; 205; 305; 405; 505) having a first gripper arm (8; 108; 208; 308; 408; 508) attached thereto,
- a second gripper carriage (4; 104; 204; 304; 404; 504) having a second gripper arm (7; 107; 207; 307; 407; 507) attached thereto,
wherein the first and second gripper carriages each consist of a non-corrosive material, in particular non-corrosive plastics, and the first and second gripper arms likewise each consist of a non-corrosive material, in particular stainless steel, wherein the first and second gripper carriages are each arranged on the at least two guide rods, and wherein at least the first gripper carriage is movable along the at least two guide rods, and
- a first, in particular tubular, linear motor (6; 106; 206; 306; 406; 506), comprising
- a first stator (62; 162; 262; 362; 462; 562), which is fluid-tightly enclosed by a casing made of a non-corrosive material, in particular stainless steel, and
- a first slider (61; 161; 261; 361; 461; 561) arranged so as to be movable relative to the first stator, which first slider has a fluid-tight slider tube made of a non-corrosive material, in particular stainless steel, in which permanent magnets are arranged,
wherein the first slider is fixedly connected to the first gripper carriage and the first stator is fixedly connected to at least one of the at least two guide rods, for movement of the first gripper carriage along the at least two guide rods by movement of the first slider relative to the first stator,
wherein the second gripper carriage (104; 204; 304; 404; 504) is also movable along the at least two guide rods (120, 121; 220, 221; 320, 321; 420, 421; 520, 521),
and wherein the device further comprises a second, in particular tubular, linear motor (109; 209; 309; 409; 509), the second linear motor comprising
- a second stator (192; 292; 392; 492; 592), which is fluid-tightly enclosed by a casing made of a non-corrosive material, in particular stainless steel, and
- a second slider (191; 291; 391; 491; 591) arranged so as to be movable relative to the second stator, which second slider has a fluid-tight slider tube made of a non-corrosive material, in particular stainless steel, in which permanent magnets are arranged,
wherein the second slider is fixedly connected to the second gripper carriage and the second stator is fixedly connected to at least one of the at least two guide rods, for movement of the second gripper carriage along the at least two guide rods by movement of the second slider relative to the second stator, and wherein the first slider (161; 261; 361; 461; 561) of the first linear motor (106; 206; 306; 406; 506) is movable out of an arrangement in which it is retracted into the first stator (162; 262; 362; 462; 562) into an arrangement in which it has moved out of the first stator and back into the retracted arrangement again, and wherein the second slider (191; 291; 391; 491; 591) of the second linear motor (109; 209; 309; 409; 509) is movable out of an arrangement in which it is retracted into the second stator (192; 292; 392; 492; 592) into an arrangement in which it has moved out of the second stator and back into the retracted arrangement again, in such a way that during the movement of the first and second sliders out of the first stator and out of the second stator, respectively, the first gripper carriage (105; 205; 305; 405; 505) and the second gripper carriage (104; 204; 304; 404; 504) are moved away from one another.

2. Device according to claim 1, wherein the at least two guide rods (20, 21; 120, 121; 220, 221; 320, 321; 420, 421; 520, 521) are hollow and have a circular cross-sectional profile, and wherein at least the first gripper carriage (5; 105; 205; 305; 405; 505) and optionally also the second gripper carriage (4; 104; 204; 304; 404; 504) is arranged on the at least two guide rods by means of plain bearings.

3. Device according to any one of the preceding claims, wherein the first gripper arm (8; 108; 208; 308; 408; 508) and the second gripper arm (7; 107; 207; 307; 407; 507) are each configured as one or more rods (70, 71, 80, 81; 170, 171, 180, 181; 270, 271, 280, 281; 370, 371, 380, 381; 470, 471, 480, 481; 570, 571, 580, 581; 670, 671; 770, 771; 870; 970, 971; 1070; 1170, 1171; 1270).

4. Device according to any one of the preceding claims, wherein either the first gripper arm (408; 508) or the second gripper arm (407; 507), or both, comprise a force sensor (485, 486, 475, 476; 585, 586, 575, 576) for measuring a force acting on the respective gripper arm in the longitudinal direction of the at least two guide rods (420, 421; 520, 521).

5. Device according to any one of the preceding claims, wherein the device further comprises at least one mounting block (3; 103; 203; 303; 403, 435; 503; 5003) for mounting the device on a transport device, wherein the at least two guide rods (20, 21; 120, 121; 220, 221; 320, 321; 420, 421; 520, 521) are also fixedly connected to one another by the at least one mounting block.

6. Device according to claim 1 and claim 5, wherein the first stator (162; 262; 362) of the first linear motor (106; 206; 306) and the second stator (192; 292; 392) of the second linear motor (109; 209; 309) are each arranged in the longitudinal direction of the at least two guide rods (120, 121; 220, 221; 320, 321) and in parallel with one another and are fixedly connected to the at least two guide rods in such a way that the first stator and the second stator at least partly overlap in the longitudinal direction of the at least two guide rods, and wherein the at least one mounting block (103; 203; 303) has only a single mounting block and both the first stator and the second stator are fixedly connected to the at least two guide rods by means of the single mounting block.

7. Device according to claim 1 and claim 5, wherein the first stator (462) of the first linear motor (406) and the second stator (492) of the second linear motor (409) are each arranged in the longitudinal direction of the at least two guide rods (420, 421) and in parallel with one another and are fixedly connected to the at least two guide rods in such a way that the first stator and the second stator are spaced apart from one another in the longitudinal direction of the at least two guide rods (420, 421), wherein the at least one mounting block has a first mounting block (403) and a second mounting block (435) which is different from the first mounting block (430), and wherein the first stator (462) is fixedly connected to the at least two guide rods (420, 421) by means of the first mounting block (403) and the second stator (492) is fixedly connected to the at least two guide rods (420, 421) by means of the second mounting block (435).

8. Device according to any one of the preceding claims, wherein the first gripper carriage (5; 105; 205; 305; 405; 505) or the second gripper carriage (4; 104; 204; 304; 404; 504), or both, comprise a recess which extends in the longitudinal direction of the at least two guide rods, and wherein the recess is arranged on the first gripper carriage (5; 105; 205; 305; 405; 505) or on the second gripper carriage (4; 104; 204; 304; 404; 504) on a respective side that faces towards the first stator (62; 162; 262; 362; 462; 562) of the first linear motor (6; 106; 206; 306; 406; 506),
wherein in the case where the first gripper carriage or the second gripper carriage overlaps the first stator in the longitudinal direction of the at least two guide rods, the recess partly surrounds the first stator in order to prevent the first gripper carriage or the second gripper carriage from making contact with the first stator.

9. Device according to any one of the preceding claims, wherein the first gripper carriage (105; 205; 305; 405; 505) or the second gripper carriage (104; 204; 304; 404; 504), or both, comprise a further recess (140, 150; 240, 250; 340, 350; 440, 450; 540, 550) which extends in the longitudinal direction of the at least two guide rods, and wherein the further recess (140, 150; 240, 250; 340, 350; 440, 450; 540, 550) is arranged on the first gripper carriage or on the second gripper carriage on a respective further side that faces towards the second stator of the second linear motor,
wherein in the case where the first gripper carriage or the second gripper carriage overlaps the second stator in the longitudinal direction of the at least two guide rods, the further recess partly surrounds the second stator in order to prevent the first gripper carriage or the second gripper carriage from making contact with the second stator.

10. Device according to any one of the preceding claims, wherein the first stator (162; 262; 362; 462; 562), or the second stator (192; 292; 392; 492; 592), or both, are each positionable at various positions in the longitudinal direction of the at least two guide rods (120, 121; 220, 221; 320, 321; 420, 421; 520, 521) and wherein the respective stator is fixedly connected to at least one of the at least two guide rods at one of the various positions .

11. Device according to claim 4, wherein the first gripper arm or the second gripper arm (1107; 1207), or both, are of two-part construction, wherein a first part (1178, 1179) of the two-part gripper arm comprises the force sensor (1175, 1176), and wherein a second part of the two-part gripper arm has an arm extension (1170, 1171) which is detachably connected to the first part.

12. Device according to any one of the preceding claims, further comprising
- a third gripper carriage (5005) having a third gripper arm (5008) attached thereto,
- a fourth gripper carriage (5004) having a fourth gripper arm (5007) attached thereto. wherein the third and fourth gripper carriages consist of a non-corrosive material, in particular non-corrosive plastics, and the third and fourth gripper arms likewise each consist of a non-corrosive material, in particular stainless steel, wherein the third and fourth gripper carriages are each arranged on the at least two guide rods (520, 521), and wherein at least the third gripper carriage is movable along the at least two guide rods, and wherein the first gripper carriage (505) and the second gripper carriage (504) as well as the third gripper carriage (5005) and the fourth gripper carriage (5004) are arranged in associated pairs on the at least two guide rods, and
- a third, in particular tubular, linear motor (5006), comprising
- a third stator (5062), which is fluid-tightly enclosed by a casing made of a non-corrosive material, in particular stainless steel, and
- a third slider arranged so as to be movable relative to the third stator, which third slider has a fluid-tight slider tube made of a non-corrosive material, in particular stainless steel, in which permanent magnets are arranged,
wherein the third slider is fixedly connected to the third gripper carriage and the third stator is fixedly connected to at least one of the at least two guide rods, for movement of the third gripper carriage along the at least two guide rods by movement of the third slider relative to the third stator.

13. Device according to claim 12, wherein the fourth gripper carriage (5004) is also movable along the at least two guide rods (520, 521), and wherein the device further comprises a fourth, in particular tubular, linear motor (5009), the fourth linear motor comprising
- a fourth stator (5092), which is fluid-tightly enclosed by a casing made of a non-corrosive material, in particular stainless steel, and
- a fourth slider arranged so as to be movable relative to the fourth stator, which fourth slider has a fluid-tight slider tube made of a non-corrosive material, in particular stainless steel, in which permanent magnets are arranged,
wherein the fourth slider is fixedly connected to the fourth gripper carriage and the fourth stator is fixedly connected to at least one of the at least two guide rods, for movement of the fourth gripper carriage along the at least two guide rods by movement of the fourth slider relative to the fourth stator.

## Revendications

1. Dispositif (1 ; 101 ; 201 ; 301 ; 401 ; 501) destiné à saisir des aliments ou des produits pharmaceutiques, comprenant :
- au moins deux tiges de guidage (20, 21 ; 120, 121 ; 220, 221 ; 320, 321 ; 420, 421 ; 520, 521) rectilignes fixes en acier inoxydable, reliées solidement entre elles et disposées en parallèle,
- un premier chariot de préhenseur (5 ; 105 ; 205 ; 305 ; 405 ; 505) avec un premier bras de préhenseur (8 ; 108 ; 208 ; 308 ; 408 ; 508) fixé sur celui-ci,
- un deuxième chariot de préhenseur (4 ; 104 ; 204 ; 304 ; 404 ; 504) avec un deuxième bras de préhenseur (7 ; 107 ; 207 ; 307 ; 407 ; 507) fixé sur celui-ci,
le premier et le deuxième chariot de préhenseur étant chacun constitués d'un matériau non corrosif, notamment d'une matière synthétique non corrosive, et le premier et le deuxième bras de préhenseur étant constitués eux aussi chacun d'un matériau non corrosif, notamment d'acier inoxydable, le premier et le deuxième chariot de préhenseur étant disposés respectivement sur les tiges de guidage, au nombre d'au moins deux, et au moins le premier chariot de préhenseur pouvant être déplacé le long des tiges de guidage, au nombre d'au moins deux, ainsi que
- un premier moteur linéaire (6 ; 106 ; 206 ; 306 ; 406 ; 506), notamment tubulaire, comportant
- un premier stator (62 ; 162 ; 262 ; 362 ; 462 ; 562) qui est entouré de manière étanche aux liquides par une enveloppe constituée d'un matériau non corrosif, notamment d'acier inoxydable, et
- un premier rotor (61 ; 161 ; 261 ; 361 ; 461, 561) qui est disposé de façon mobile par rapport au premier stator et présente un tube de rotor étanche aux liquides, constitué d'un matériau non corrosif, notamment d'acier inoxydable, dans lequel sont disposés des aimants permanents,
le premier rotor étant relié solidement au premier chariot de préhenseur, et le premier stator étant relié solidement à au moins une des tiges de guidage, au nombre d'au moins deux, en vue du déplacement du premier chariot de préhenseur le long des tiges de guidage, au nombre d'au moins deux, par déplacement du premier rotor par rapport au premier stator,
le deuxième chariot de préhenseur (104 ; 204 ; 304 ; 404 ; 504) pouvant également être déplacé le long des tiges de guidage (120, 121 ; 220, 221 ; 320, 321 ; 420, 421 ; 520, 521), au nombre d'au moins deux, et le dispositif comprenant en outre un deuxième moteur linéaire (109 ; 209 ; 309 ; 409 ; 509), notamment tubulaire, le deuxième moteur linéaire comportant
- un deuxième stator (192 ; 292 ; 392 ; 492 ; 592) qui est entouré de manière étanche aux liquides par une enveloppe constituée d'un matériau non corrosif, notamment d'acier inoxydable, et
- un deuxième rotor (191 ; 291 ; 391 ; 491, 591) qui est disposé de façon mobile par rapport au deuxième stator et présente un tube de rotor étanche aux liquides, constitué d'un matériau non corrosif, notamment d'acier inoxydable, dans lequel sont disposés des aimants permanents,
le deuxième rotor étant relié solidement au deuxième chariot de préhenseur, et le deuxième stator étant relié solidement à au moins une des tiges de guidage, au nombre d'au moins deux, en vue du déplacement du deuxième chariot de préhenseur le long des tiges de guidage, au nombre d'au moins deux, par déplacement du deuxième rotor par rapport au deuxième stator, et le premier rotor (161 ; 261 ; 361 ; 461, 561) du premier moteur linéaire (106 ; 206 ; 306 ; 406 ; 506) pouvant être déplacé d'une disposition rentrée dans le premier stator (162 ; 262 ; 362 ; 462 ; 562), dans une disposition sortie du premier stator, et de nouveau dans la disposition rentrée, et le deuxième rotor (191 ; 291 ; 391 ; 491, 591) du deuxième moteur linéaire (109 ; 209 ; 309 ; 409 ; 509) pouvant être déplacé d'une disposition rentrée dans le deuxième stator (192 ; 292 ; 392 ; 492 ; 592), dans une disposition sortie du deuxième stator et de nouveau dans la disposition rentrée, de telle sorte que lors du déplacement du premier et du deuxième rotor hors du premier stator, respectivement du deuxième stator, le premier chariot de préhenseur (105 ; 205 ; 305 ; 405 ; 505), et le deuxième chariot de préhenseur (104 ; 204 ; 304 ; 404 ; 504) sont déplacés dans des directions opposées.

2. Dispositif selon la revendication 1, dans lequel les tiges de guidage (20, 21 ; 120, 121 ; 220, 221 ; 320, 321 ; 420, 421 ; 520, 521), au nombre d'au moins deux, sont creuses et présentent un profil transversal circulaire, et dans lequel au moins le premier chariot de préhenseur (5 ; 105 ; 205 ; 305 ; 405 ; 505) et, le cas échéant, également le deuxième chariot de préhenseur (4 ; 104 ; 204 ; 304 ; 404 ; 504) sont disposés sur les tiges de guidage, au nombre d'au moins deux, à l'aide de paliers lisses.

3. Dispositif selon une des revendications précédentes, dans lequel le premier bras de préhenseur (8 ; 108 ; 208 ; 308 ; 408 ; 508) et le deuxième bras de préhenseur (7 ; 107 ; 207 ; 307 ; 407 ; 507) sont réalisés chacun sous la forme d'une ou plusieurs tiges (70, 71, 80, 81 ; 170, 171, 180, 181 ; 270, 271, 280, 281 ; 370, 371, 380, 381 ; 470, 471, 480, 481 ; 570, 571, 580, 581 ; 670, 671 ; 770, 771 ; 870 ; 970, 971 ; 1070 ; 1170, 1171 ; 1270).

4. Dispositif selon une des revendications précédentes, dans lequel soit le premier bras de préhenseur (408 ; 508) soit le deuxième bras de préhenseur (407 ; 507), soit les deux, présentent un capteur de force (485, 486, 475, 476 ; 585, 586, 575, 576) destiné à mesurer une force agissant sur le bras de préhenseur respectif, dans le sens longitudinal des tiges de guidage (420, 421 ; 520, 521), au nombre d'au moins deux.

5. Dispositif selon une des revendications précédentes, dans lequel le dispositif comprend en outre au moins un bloc de montage (3 ; 103 ; 203 ; 303 ; 403, 435 ; 503 ; 5003) en vue du montage du dispositif sur un dispositif de transport, le bloc de montage, au nombre d'au moins un, reliant solidement entre elles également les tiges de guidage (20, 21 ; 120, 121 ; 220, 221 ; 320, 321 ; 420, 421 ; 520, 521), au nombre d'au moins deux.

6. Dispositif selon la revendication 1 et la revendication 5, dans lequel le premier stator (162 ; 262 ; 362) du premier moteur linéaire (106 ; 206 ; 306) et le deuxième stator (192 ; 292 ; 392) du deuxième moteur linéaire (109 ; 209 ; 309) sont disposés chacun dans le sens longitudinal des tiges de guidage (120, 121 ; 220, 221 ; 320, 321), au nombre d'au moins deux, et parallèlement l'un à l'autre et sont reliés solidement aux tiges de guidage, au nombre d'au moins deux, de manière à ce que le premier stator et le deuxième stator se chevauchent au moins en partie dans le sens longitudinal des tiges de guidage, au nombre d'au moins deux, et dans lequel le bloc de montage (103 ; 203 ; 303), au nombre d'au moins un, comporte un seul bloc de montage, et aussi bien le premier stator que le deuxième stator sont reliés solidement aux tiges de guidage, au nombre d'au moins deux, à l'aide du bloc de montage unique.

7. Dispositif selon la revendication 1 et la revendication 5, dans lequel le premier stator (462) du premier moteur linéaire (406) et le deuxième stator (492) du deuxième moteur linéaire (409) sont disposés chacun dans le sens longitudinal des tiges de guidage (420, 421), au nombre d'au moins deux, et parallèlement l'un à l'autre et sont reliés solidement aux tiges de guidage, au nombre d'au moins deux, de manière à ce que le premier stator et le deuxième stator soient espacés l'un de l'autre dans le sens longitudinal des tiges de guidage (420, 421), au nombre d'au moins deux, le bloc de montage, au nombre d'au moins un, comportant un premier bloc de montage (403) et un deuxième bloc de montage (435) différent du premier bloc de montage (430), et dans lequel le premier stator (462) est relié solidement aux tiges de guidage (420, 421), au nombre d'au moins deux, à l'aide du premier bloc de montage (403), et le deuxième stator (492) est relié solidement aux tiges de guidage (420, 421), au nombre d'au moins deux, à l'aide du deuxième bloc de montage (435).

8. Dispositif selon une des revendications précédentes, dans lequel le premier chariot de préhenseur (5 ; 105 ; 205 ; 305 ; 405 ; 505) ou le deuxième chariot de préhenseur (4 ; 104 ; 204 ; 304 ; 404 ; 504), ou les deux, comportent un évidement qui s'étend dans le sens longitudinal des tiges de guidage, au nombre d'au moins deux, et dans lequel l'évidement est placé sur un côté respectif du premier chariot de préhenseur (5 ; 105 ; 205 ; 305 ; 405 ; 505) ou du deuxième chariot de préhenseur (4 ; 104 ; 204 ; 304 ; 404 ; 504), qui est tournée vers le premier stator (62 ; 162 ; 262 ; 362 ; 462 ; 562) du premier moteur linéaire (6 ; 106 ; 206 ; 306 ; 406 ; 506),
sachant qu'en cas de chevauchement du premier chariot de préhenseur ou du deuxième chariot de préhenseur avec le premier stator, dans le sens longitudinal des tiges de guidage, au nombre d'au moins deux, l'évidement entoure partiellement le premier stator pour éviter un contact du premier chariot de préhenseur ou du deuxième chariot de préhenseur avec le premier stator.

9. Dispositif selon une des revendications précédentes, dans lequel le premier chariot de préhenseur (105 ; 205 ; 305 ; 405 ; 505) ou le deuxième chariot de préhenseur (104 ; 204 ; 304 ; 404 ; 504), ou les deux, comportent un évidement supplémentaire (140, 150 ; 240, 250 ; 340, 350 ; 440, 450 ; 540, 550) qui s'étend dans le sens longitudinal des tiges de guidage, au nombre d'au moins deux, et dans lequel l'évidement supplémentaire (140, 150 ; 240, 250 ; 340, 350 ; 440, 450 ; 540, 550) est placé sur un autre côté respectif du premier chariot de préhenseur ou du deuxième chariot de préhenseur, qui est tourné vers le deuxième stator du deuxième moteur linéaire,
sachant qu'en cas de chevauchement du premier ou du deuxième chariot de préhenseur avec le deuxième stator, dans le sens longitudinal des tiges de guidage, au nombre d'au moins deux, l'évidement supplémentaire entoure partiellement le deuxième stator pour éviter un contact du premier chariot de préhenseur ou du deuxième chariot de préhenseur avec le deuxième stator.

10. Dispositif selon une des revendications précédentes, dans lequel le premier stator (162 ; 262 ; 362 ; 462 ; 562) ou le deuxième stator (192 ; 292 ; 392 ; 492 ; 592), ou les deux, peuvent être positionnés chacun dans des positions différentes dans le sens longitudinal des tiges de guidage (120, 121 ; 220, 221 ; 320, 321 ; 420, 421 ; 520, 521), au nombre d'au moins deux, et dans lequel le stator respectif est relié, respectivement dans une des positions différentes, solidement à au moins une des tiges de guidage, au nombre d'au moins deux.

11. Dispositif selon la revendication 4, dans lequel le premier bras de préhenseur ou le deuxième bras de préhenseur (1107 ; 1207), ou les deux, sont réalisés en deux parties, une première partie (1178, 1179) du bras de préhenseur en deux parties comportant le capteur de force (1175, 1176), et une deuxième partie du bras de préhenseur en deux parties présentant un prolongement de bras (1170, 1171) qui est relié de façon amovible à la première partie.

12. Dispositif selon une des revendications précédentes, comprenant en outre
- un troisième chariot de préhenseur (5005) avec un troisième bras de préhenseur (5008) fixé sur celui-ci,
- un quatrième chariot de préhenseur (5004) avec un quatrième bras de préhenseur (5007) fixé sur celui-ci,
le troisième et le quatrième bras de préhenseur étant constitués d'un matériau non corrosif, notamment d'une matière synthétique non corrosive, et le troisième et le quatrième bras de préhenseur étant également constitués chacun d'un matériau non corrosif, notamment d'acier inoxydable, le troisième et le quatrième bras de préhenseur étant disposés respectivement sur les tiges de guidage (520, 521), au nombre d'au moins deux, et au moins le troisième chariot de préhenseur pouvant être déplacé le long des tiges de guidage, au nombre d'au moins deux, et le premier (505) et le deuxième (504) chariot de préhenseur, ainsi que le troisième (5005) et le quatrième (5004) chariot de préhenseur étant disposés chaque fois en étant associés par paires sur les tiges de guidage, au nombre d'au moins deux, ainsi que
- un troisième moteur linéaire (5006), notamment tubulaire, comportant
- un troisième stator (5062) qui est entouré de manière étanche aux liquides par une enveloppe constituée d'un matériau non corrosif, notamment d'acier inoxydable, et
- un troisième rotor qui est disposé de façon mobile par rapport au troisième stator et présente un tube de rotor étanche aux liquides, constitué d'un matériau non corrosif, notamment d'acier inoxydable, dans lequel sont disposés des aimants permanents,
le troisième rotor étant relié solidement au troisième chariot de préhenseur, et le troisième stator étant relié solidement à au moins une des tiges de guidage, au nombre d'au moins deux, en vue du déplacement du troisième chariot de préhenseur le long des tiges de guidage, au nombre d'au moins deux, par déplacement du troisième rotor par rapport au troisième stator.

13. Dispositif selon la revendication 12, dans lequel le quatrième chariot de préhenseur (5004) peut également être déplacé le long des tiges de guidage (520, 521), au nombre d'au moins deux, et dans lequel le dispositif présente en outre un quatrième moteur linéaire (5009), notamment tubulaire, le quatrième moteur linéaire comportant
- un quatrième stator (5092) qui est entouré de manière étanche aux liquides par une enveloppe constituée d'un matériau non corrosif, notamment d'acier inoxydable, et
- un quatrième rotor qui est disposé de façon mobile par rapport au quatrième stator et présente un tube de rotor étanche aux liquides, constitué d'un matériau non corrosif, notamment d'acier inoxydable, dans lequel sont disposés des aimants permanents,
le quatrième rotor étant relié solidement au quatrième chariot de préhenseur, et le quatrième stator étant relié solidement à au moins une des tiges de guidage, au nombre d'au moins deux, en vue du déplacement du quatrième chariot de préhenseur le long des tiges de guidage, au nombre d'au moins deux, par déplacement du quatrième rotor par rapport au quatrième stator.
